(19) Europäisches Patentamt
European Patent Office
Office européen des brevets

(11) **EP 2 199 691 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
**F24D 11/00** *(2006.01)*          **F24D 12/02** *(2006.01)*
**F24D 19/10** *(2006.01)*

(21) Anmeldenummer: **09176335.9**

(22) Anmeldetag: **18.11.2009**

(54) **Verfahren und Vorrichtung zum Regeln einer Wärmeerzeugungseinrichtung**

Method and device for regulating a heat generation device

Procédé et dispositif destinés au réglage d'une installation de production de chaleur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008063860**

(43) Veröffentlichungstag der Anmeldung:
**23.06.2010 Patentblatt 2010/25**

(73) Patentinhaber: **Viessmann Werke GmbH & Co KG 35107 Allendorf (DE)**

(72) Erfinder:
• **Osterloh, Reinhard 59955 Winterberg (DE)**
• **Zieracker, Karsten 35066 Frankenberg (DE)**
• **Handt, Michael 35066 Frankenberg (DE)**

(74) Vertreter: **MERH-IP Matias Erny Reichl Hoffmann Patentanwälte PartG mbB Paul-Heyse-Strasse 29 80336 München (DE)**

(56) Entgegenhaltungen:
DE-A1- 10 312 520     DE-A1- 19 931 787
DE-C1- 19 856 344     US-A- 4 034 912

EP 2 199 691 B1

**Beschreibung**

**Hintergrund der Erfindung**

Die vorliegende Erfindung betrifft ein Verfahren und eine Vorrichtung zum Regeln einer Wärmeerzeugungseinrichtung mit einem ersten Wärmeerzeuger, einem zweiten Wärmeerzeuger und einem Wärmespeicher zum Speichern von Wärme.

Insbesondere betrifft die vorliegende Erfindung ein Verfahren und eine Vorrichtung zum Regeln einer bivalenten Wärmeerzeugungseinrichtung mit einem ersten Wärmeerzeuger, einem zweiten Wärmeerzeuger und einem Wärme-speicher zum Speichern von Wärme, wobei der erste Wärmeerzeuger dazu geeignet ist, dem Wärmespeicher zeitweise Wärme zuzuführen und der zweite Wärmeerzeuger dazu geeignet ist, dem Wärmespeicher nach Bedarf Wärme zuzuführen.

Ferner betrifft die vorliegende Erfindung ein Verfahren und eine Vorrichtung zum Regeln einer bivalenten Wärmeerzeugungseinrichtung mit einem ersten Wärmeerzeuger, der in Abhängigkeit äußerer Einflüsse einem Wärme-speicher zum Speichern von Wärme Wärme zuführen kann, z.B. ein Wärmeerzeuger, der erneuerbare Energien nutzt, insbesondere ein Solarkollektor, und einem zweiten Wärmeerzeuger, der dazu geeignet ist, dem Wärmespeicher nach Bedarf Wärme zuzuführen, insbesondere einem Brenner. Derartige zumindest bivalente Wärmeerzeugungseinrichtungen mit einem ersten Wärmeerzeuger, der geeignet ist, dem Wärmespeicher zeitweise Wärme zuzuführen, und einem zweiten Wärmeerzeuger, der geeignet ist, dem Wärmespeicher nach Bedarf Wärme zuzuführen, sind dem Stand der Technik wohlbekannt.

Dem Grundprinzip einer derartigen bivalenten Wärmeerzeugungseinrichtung nach wird dem Wärmespeicher vorzugsweise durch den Solarkollektor Wärme zugeführt, wenn der Solarkollektor geeignet ist, dem Wärmespeicher Wärme zuzuführen, wenn Solarertrag zur Verfügung steht. Um einen Temperaturwert, der sich an einem eingestellten Solltemperaturwert orientiert, im Wärmespeicher halten zu können, selbst wenn kein Solarertrag zur Verfügung steht, umfasst die bivalente Wärmeerzeugungseinrichtung zusätzlich einen konventionellen Wärmeerzeuger, z. B. mit einem Brenner, der je nach Bedarf, also wenn z. B. kein Solarertrag zur Verfügung steht, dazu benutzt werden kann, dem Wärmespeicher Wärme zuzuführen, um eine Temperatur im Wärmespeicher nahe oder oberhalb des eingestellten Sollwerts zu halten.

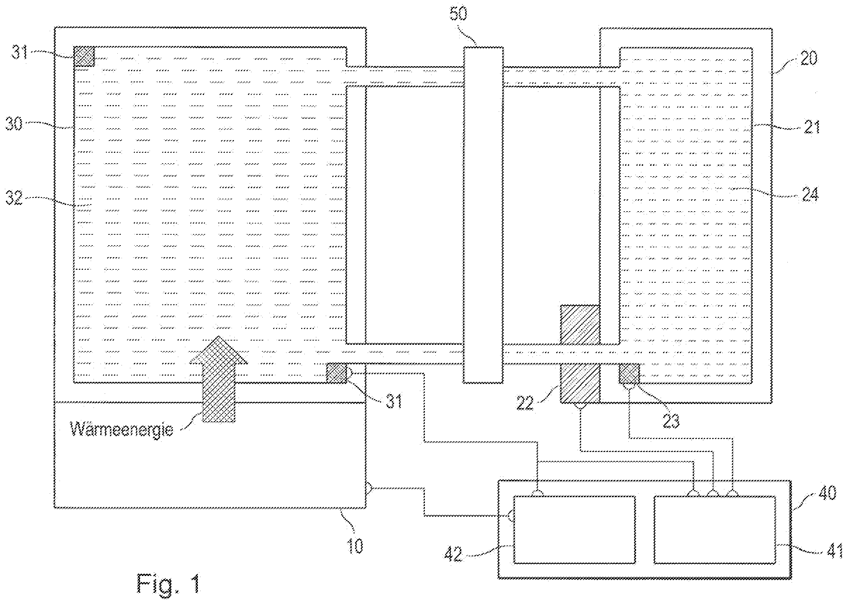

Ein beispielhafter Aufbau einer derartigen bivalenten Wärmeerzeugungseinrichtung ist in Fig. 1 dargestellt. Die bivalente Wärmeerzeugungseinrichtung umfasst einen Brenner 10 und einen Wärmespeicher 30, der mit einem thermischen Speichermedium 32, z. B. Wasser, gefüllt ist. Der Brenner 10 wird durch eine Brennersteuerungseinrichtung 42 einer Wärmeerzeugungssteuereinrichtung 40 gesteuert. Die Brennersteuerungseinrichtung 42 ist zumindest dazu geeignet, den Brenner 10 zu- und abzuschalten, um dem Wärmespeicher 30, bzw. dem thermischen Speichermedium 32 im Wärmespeicher 30, nach Bedarf Wärmeenergie zuzuführen, um die Temperatur des thermischen Speichermediums 32 im Wärmespeicher 30 zu erhöhen. Des Weiteren kann die Brennersteuerungseinrichtung 42 dazu geeignet sein, die Brennerleistung des Brenners 10 zu modulieren.

Weiterhin umfasst der Wärmespeicher 30 zumindest eine Wärmespeichersensoreinrichtung 31, die dazu geeignet ist, zumindest eine Temperatur des thermischen Speichermediums 32 im Wärmespeicher 30 in zumindest einem Teil des Wärmespeichers 30 zu ermitteln.

Des Weiteren umfasst die Wärmeerzeugungseinrichtung einen Solarkollektor 20 mit einem Kollektorspeicher 21, einer Kollektorkreispumpe 22 und einer Solarkollektorsensoreinrichtung 23. Der Kollektorspeicher 21 ist dazu geeignet, einem im Kollektorspeicher 21 gespeicherten thermischen Speichermedium 24 Wärme zuzuführen, wenn Solarertrag zur Verfügung steht. Das thermische Speichermedium 24 im Kollektorspeicher ist hierbei gegebenenfalls ein frostsicheres thermisches Speichermedium.

Der Kollektorspeicher 21 ist über einen Kollektorrücklauf und einen Kollektorvorlauf über einen Wärmetauscher 50 mit dem Wärmespeicher 30 verbunden.

Die Kollektorkreispumpe 22 des Solarkollektors 20 ist dazu geeignet, das thermische Speichermedium 24, das in dem Kollektorspeicher 21 gespeichert ist, durch den sogenannten Kollektorvorlauf in den Wärmetauscher 50 zu pumpen und thermisches Speichermedium 24 zurück aus dem Wärmetauscher 50 durch den Kollektorrücklauf in den Kollektorspeicher 21 zu pumpen. Liegt die Temperatur des thermischen Speichermediums 24, das im Kollektorspeicher 21 gespeichert ist, über der Temperatur des thermischen Speichermediums 32, das im Wärmespeicher 30 gespeichert ist, so kann durch die Kollektorkreispumpe 22 über den Wärmetauscher 50 dem Wärmespeicher 30 Wärme zugeführt werden, wenn thermisches Speichermedium 24 aus dem Kollektorspeicher 21 durch den Wärmetauscher 50 gepumpt wird. Gleichzeitig wird dem Kollektorspeicher 21 Wärme entzogen, da in diesem Fall das thermische Speichermedium 32 aus dem Wärmespeicher 30 eine niedrigere Temperatur als das thermische Speichermedium 24 in dem Kollektor-speicher aufweist und über den Wärmetauscher 50 eine Übertragung von Wärme von dem thermischen Speichermedium 24 zu dem thermischen Speichermedium 32 stattfindet.

Die Wärmeerzeugungssteuereinrichtung 40 umfasst weiterhin eine Solarkollektorsteuerungseinrichtung 41 zum Steuern der Kollektorkreispumpe 22, um bei Verfügbarkeit von Solarertrag, bzw. bei der Möglichkeit einer Wärmezufuhr von dem Solarkollektor 20 zu dem Wärmespeicher 30, dem Wärmespeicher 30 über den Wärmetauscher 50 Wärme durch Einschalten der Kollektorkreispumpe 22 zuzuführen. Die Solarkollektorsensoreinrichtung 32 ist dazu geeignet, eine Temperatur des thermischen Speichermediums 24 zu ermitteln zu ermitteln (Kollektortemperatur-Istwert $T_{KOLLEKTOR}$).

Über die Wärmeerzeugungsteuerungseinrichtung 40 wird ein Speichertemperatur-Sollwert $T_{SOLL}$ eingestellt, der einen Sollwert der Temperatur des thermischen Speichermediums 32 im Wärmespeicher 30 angibt. Sowohl die Regelung des Brenners 10, wie auch die Regelung des Solarkollektors 20 werden anhand des eingestellten Speichertemperatur-Sollwert $T_{SOLL}$ ausgeführt.

Die Solarkollektorsteuerungseinrichtung 41 regelt die Funktion des Solarkollektors 20 über eine sogenannte Differenztemperaturregelung. Hierfür werden eine Kollektorkreispumpen-Ausschalttemperaturdifferenz und eine Kollektorkreispumpen-Einschalttemperaturdifferenz eingestellt. Über die Solarkollektorsensoreinrichtung 23 wird ein momentaner Kollektortemperatur-Istwert $T_{KOLLEKTOR}$ des thermischen Speichermediums 24 im Kollektorspeicher 21 ermittelt und über die Wärmespeichersensoreinrichtung 31 wird ein Speichertemperatur-Istwert $T_{IST}$ des thermischen Speichermediums 32 im Wärmespeicher 30 ermittelt, wobei die Solarkollektorsteuerungseinrichtung 41 den ermittelten momentanen Kollektortemperatur-Istwert $T_{KOLLEKTOR}$ mit dem ermittelten momentanen Speichertemperatur-Istwert $T_{IST}$ vergleicht.

Die Kollektorkreispumpe 22 wird eingeschaltet, wenn der momentane Kollektortemperatur-Istwert $T_{KOLLEKTOR}$ den Speichertemperatur-Istwert $T_{IST}$ um den Wert der eingestellten Kollektorkreispumpen-Einschalttemperaturdifferenz oder mehr übersteigt. Daraufhin wird die Kollektorkreispumpe wieder abgeschaltet, wenn der bei eingestellter Kollektorkreispumpe sinkende Kollektortemperatur-Istwert $T_{KOLLEKTOR}$ einen Wert erreicht, bei dem eine Abweichung zwischen Kollektortemperatur-Istwert $T_{KOLLEKTOR}$ und Speichertemperatur-Istwert $T_{IST}$ die eingestellte Kollektorkreispumpen-Ausschalttemperaturdifferenz erreicht oder unterschreitet.

Die Differenztemperaturregelung des Solarkollektors 20 bewirkt somit, dass dem Wärmespeicher 30 immer dann von dem Kollektorspeicher 21 des Solarkollektors 20 durch Einschalten der Kollektorkreispumpe 22 Wärme zugeführt wird, wenn Solarertrag in ausreichendem Maß zur Verfügung steht. Wenn eine Einstrahlung von Sonnenenergie dem thermischen Speichermedium 24 im Kollektorspeicher 21 Wärme zugeführt hat, so dass sich die Kollektorspeichertemperatur derart erhöht hat, dass die Bedingung

$$T_{KOLLEKTOR} > T_{IST} + \text{Kollektorkreispumpen-Einschalttemperaturdifferenz}$$

erfüllt ist.

Des Weiteren wird vermieden, dass der Solarkollektor 20 dem Wärmespeicher 30 bei eingeschalteter Kollektorkreispumpe 22 Wärme entzieht, indem die Kollektorkreispumpe 22 wieder in Abhängigkeit der Kollektorkreispumpen-Ausschalttemperaturdifferenz abgeschaltet wird, wenn die Bedingung

$$T_{KOLLEKTOR} < T_{IST} + \text{Kollektorkreispumpen-Ausschalttemperaturdifferenz}$$

erfüllt ist.

Wenn kein Solarertrag zur Verfügung steht und somit keine Wärme von dem Kollektorspeicher 21 zu dem Wärmespeicher 30 zugeführt werden kann, kann der Brenner 10 dem Wärmespeicher 30 Energie zuführen, um je nach Bedarf die Temperatur des thermischen Speichermediums 32 im Wärmespeicher 30 durch Zufuhr von Wärmeenergie zu erhöhen, um zu verhindern, dass die Speichertemperatur bei fehlendem Solarertrag den Speichertemperatur-Sollwert $T_{SOLL}$ in einem unerwünschten Maße unterschreitet.

Im Stand der Technik wird die Steuerung des Brenners 10 unabhängig von der Solarkollektorsteuerung anhand einer Zweipunktreglermethode mit Hysterese ausgeführt. Die Brennersteuerungseinrichtung 42 ermittelt eine Regelabweichung der Temperatur des thermischen Speichermediums 32 im Wärmespeicher 30 durch Vergleich eines momentanen ermittelten Speichertemperatur-Istwerts $T_{IST}$ mit dem eingestellten Speichertemperatur-Sollwert $T_{SOLL}$. In der Zweipunktreglermethode des Brenners werden eine Brenner-Einschalttemperaturdifferenz und eine Brenner-Ausschalttemperaturdifferenz eingestellt. Unterschreitet der ermittelte momentane Speichertemperatur-Istwert $T_{IST}$ den Speichertemperatur-Sollwert $T_{SOLL}$ um die eingestellte Brenner-Einschalttemperaturdifferenz oder mehr, wird der Brenner durch die Brennersteuerungseinrichtung 42 zugeschaltet, um dem thermischen Speichermedium 32 im Wärmespeicher 30 Wärme zuzuführen. Wird nun bei zugeschaltetem Brenner durch die Brennersteuerungseinrichtung 42 ermittelt, dass der Speichertemperatur-Istwert $T_{IST}$ den Speichertemperatur-Sollwert $T_{SOLL}$ um die eingestellte Brenner-Ausschalttemperaturdifferenz oder mehr übersteigt, wird der Brenner 10 von der Brennersteuerungseinrichtung 42 wieder ausgeschaltet.

Somit kann sichergestellt werden, dass eine Solltemperatur des thermischen Speichermediums 32 im Wärmespeicher 30 nur geringfügig, entsprechend der eingestellten Brenner-Einschalttemperaturdifferenz, unter den eingestellten Speichertemperatur-Sollwert $T_{SOLL}$ fallen kann, selbst wenn kein Solarertrag zur Verfügung steht.

Die Verfügbarkeit von Solarertrag im Solarkollektor 20 ist abhängig von äußeren Faktoren, z. B. der Verfügbarkeit von Sonnenenergie, so dass eine Zuführung von Wärme zu dem Wärmespeicher 30 durch den Solarkollektor 20 nur zeitweise und gegebenenfalls unregelmäßig in Abhängigkeit der Verfügbarkeit von Sonnenenergie zur Verfügung steht. Somit kann in der oben beschriebenen Regelungsmethode einer zumindest bivalenten Wärmeerzeugungseinrichtung das Problem auftreten, dass der Brenner 10 zugeschaltet wird, wenn oder kurz bevor Solarertrag zur Verfügung steht, wobei der gegebenenfalls zur Verfügung stehende Solarertrag somit nicht optimal genutzt wird.

Der Brenner 10 wird somit gegebenenfalls unnötig hinzugeschaltet, wobei ein Verbrauch an Brennstoff, z.B. fossilem Brennstoff, entsteht, obwohl Solarertrag zur Verfügung steht oder kurz bevor Solarertrag zur Verfügung steht.

In einem Betrieb der Wärmeerzeugungseinrichtung im Sommer kann die vorstehend beschriebene Methode dazu führen, dass der Brenner 10 (oder ein anderer konventioneller Wärmeerzeuger als zweiter Wärmeerzeuger) mit nur kurzen Laufzeiten und entsprechend langen Stillstandzeiten betrieben wird. Bei einem derartigen Betrieb mit kurzen Laufzeiten und langen Stillstandzeiten tritt ein sehr geringer Wirkungsgrad bei dem Brenner 10 auf.

Die Offenlegungsschrift DE 103 12 520 A1 beschreibt ein Verfahren zum Betreiben eines solargekoppelten Wärmekreises mit einem Solarkollektor, einer Zusatzwärmequelle und einem Solarwärmespeicher. Unterschreitet der Temperaturverlauf des Speichers ein festgelegtes Temperaturprofil, wird die Zusatzwärmequelle hinzugeschaltet.

**Zusammenfassung der Erfindung**

Eine Aufgabe der vorliegenden Erfindung ist es, die Nachteile und Probleme des vorstehend beschriebenen, aus dem Stand der Technik bekannten Verfahrens zum Regeln einer zumindest bivalenten Wärmeerzeugungseinrichtung zu vermeiden und ein optimiertes Verfahren und eine entsprechende Vorrichtung zum Regeln einer zumindest bivalenten Wärmeerzeugungseinrichtung bereitzustellen.

Eine weitere Aufgabe der vorliegenden Erfindung ist es, in einer bivalenten Wärmeerzeugungseinrichtung den Energiebedarf zu reduzieren, z. B. durch Reduktion des Bedarfs an Brennstoff, insbesondere fossilem Brennstoff, oder Reduktion des Bedarfs an elektrischer Energie.

Ferner ist es eine Aufgabe der Erfindung, ein Verfahren zum Regeln einer bivalenten Wärmeerzeugungseinrichtung bereitzustellen, in der ein Komfortverlust für einen Verbraucher vermieden wird.

Die oben genannten Aufgaben werden erfindungsgemäß gelöst durch ein Verfahren zum Regeln einer Wärmeerzeugungseinrichtung mit einem ersten Wärmeerzeuger, einem zweiten Wärmeerzeuger und einem Wärmespeicher zum Speichern von Wärme nach Anspruch 1 und einer Vorrichtung zum Regeln einer Wärmeerzeugungseinrichtung mit einem ersten Wärmeerzeuger, einem zweiten Wärmeerzeuger und einem Wärmespeicher zum Speichern von Wärme nach Anspruch 15. Bevorzugte Ausführungsbeispiele des Verfahrens bzw. bevorzugte Ausführungsformen der Vorrichtung werden beschrieben durch die abhängigen Ansprüche.

Erfindungsgemäß werden ein Verfahren und eine Vorrichtung zum Regeln einer Wärmeerzeugungseinrichtung mit einem ersten Wärmeerzeuger, einem zweiten Wärmeerzeuger und einem Wärmespeicher zum Speichern von Wärme bereitgestellt, wobei der erste Wärmeerzeuger zumindest zwei Betriebszustände einnehmen kann und in einem ersten Betriebszustand der mindestens zwei Betriebszustände dazu geeignet ist, dem Wärmespeicher Wärme zuzuführen und der zweite Wärmeerzeuger dazu geeignet ist, dem Wärmespeicher Wärme zuzuführen.

In einer derartigen zumindest bivalenten Wärmeerzeugungseinrichtung ist es möglich, einem Wärmespeicher durch zwei unabhängige Wärmeerzeuger Wärme zuzuführen, wobei der erste Wärmeerzeuger dem Wärmespeicher in einem ersten Betriebszustand aus zumindest zwei verschiedenen Betriebszuständen geeignet ist, dem Wärmespeicher Wärme zuzuführen. Der erste Wärmeerzeuger kann hierbei ein Wärmeerzeuger sein, der von äußeren Faktoren abhängig Wärme zu dem Wärmespeicher zuführen kann, z. B. in Abhängigkeit der Verfügbarkeit von erneuerbarer Energie, z. B. Sonnen- oder Windenergie. Der erste Wärmespeicher ist dazu geeignet, den ersten Betriebszustand zeitweise in Abhängigkeit äußerer Faktoren anzunehmen. Somit kann der erste Wärmeerzeuger dazu geeignet sein, dem Wärmespeicher zeitweise Wärme zuzuführen.

Zusätzlich ist es möglich, dem Wärmespeicher durch den zweiten Wärmeerzeuger Wärme zuzuführen. Der zweite Wärmeerzeuger kann hierbei ein konventioneller Wärmeerzeuger sein, der geeignet ist, dem Wärmespeicher Wärme durch Umwandlung von elektrischer Energie in Wärmeenergie oder durch Verbrennung eines Brennstoffs, z. B. eines fossilen Brennstoffs wie Gas oder Öl zuzuführen. Der zweite Wärmeerzeuger kann somit dazu geeignet sein, dem Wärmespeicher bei Bedarf Wärme zuzuführen, wobei der Bedarf einer Wärmezufuhr zu dem Wärmespeicher in Abhängigkeit einer Temperatur eines thermischen Speichermediums im Wärmespeicher und einer Solltemperatur bestimmt werden kann.

Erfindungsgemäß umfasst das Verfahren zum Regeln einer Wärmeerzeugungseinrichtung die Schritte:

- Ermitteln zumindest eines Speichertemperatur-Istwerts $T_{IST}$, der von einer Temperatur in zumindest einem Teil des Wärmespeichers abhängt,
- Feststellen, ob der erste Wärmeerzeuger den ersten Betriebszustand der mindestens zwei Betriebszustände des ersten Wärmeerzeugers einnimmt,
- Zuführen von Wärme zu dem Wärmespeicher durch den ersten Wärmeerzeuger, wenn festgestellt wird, dass der erste Wärmeerzeuger den ersten Betriebszustand der zumindest zwei Betriebszustände einnimmt,
- Einstellen eines Speichertemperatur-Sollwerts $T_{SOLL}$, der einen Sollwert der Speichertemperatur im Wärmespeicher angibt,
- Vergleichen des eingestellten Speichertemperatur-Sollwerts $T_{SOLL}$ mit dem ermittelten Speichertemperatur-Istwert $T_{IST}$ zum Bestimmen eines Abweichungsparameters zwischen Speichertemperatur-Sollwert $T_{SOLL}$ und Speichertemperatur-Istwert $T_{IST}$,
- Feststellen anhand des bestimmten Abweichungsparameters, ob dem Wärmespeicher Wärme durch den zweiten Wärmeerzeuger zuzuführen ist, wobei in einer ersten Betriebsart der Wärmeerzeugungseinrichtung dem Wärmespeicher Wärme durch den zweiten Wärmeerzeuger zuzuführen ist, wenn der bestimmte Abweichungsparameter eine erste Bedingung erfüllt.

Weiterhin ist das erfindungsgemäße Verfahren zum Regeln einer Wärmeerzeugungseinrichtung gekennzeichnet durch den weiteren Schritt:

- Umschalten einer Betriebsart der Wärmeerzeugungseinrichtung von der ersten Betriebsart in eine zweite Betriebsart der zumindest zwei Betriebsarten der Wärmeerzeugungseinrichtung in Abhängigkeit einer Zufuhr von Wärme durch den ersten Wärmeerzeuger in dem ersten Betriebszustand,

wobei in der zweiten Betriebsart der Wärmeerzeugungseinrichtung im Schritt Feststellen, ob dem Wärmespeicher Wärme durch den zweiten Wärmeerzeuger zuzuführen ist, festgestellt wird, dass dem Wärmespeicher keine Wärme durch den zweiten Wärmeerzeuger zuzuführen ist, obwohl der bestimmte Abweichungsparameter zwischen Speichertemperatur-Sollwert $T_{SOLL}$ und Speichertemperatur-Istwert $T_{IST}$ die erste Bedingung erfüllt.

Der wesentliche Vorteil des oben beschriebenen Verfahrens zum Regeln einer Wärmeerzeugungseinrichtung liegt darin, dass im Gegensatz zum Stand der Technik neben einer Regelung einer Wärmeerzeugungseinrichtung in einer ersten Betriebsart der Wärmeerzeugungseinrichtung zusätzlich eine Regelung in einer weiteren zweiten Betriebsart möglich ist, wobei die zweite Betriebsart es ermöglicht, eine Nutzungsrate einer Wärmezufuhr durch den ersten Wärmeerzeuger zu optimieren.

In der ersten Betriebsart der Wärmeerzeugungseinrichtung wird anhand des bestimmten Abweichungsparameters zwischen dem Speichertemperatur-Sollwert $T_{SOLL}$ und dem Speichertemperatur-Istwert $T_{IST}$ festgestellt, ob dem Wärmespeicher durch den zweiten Wärmeerzeuger Wärme zuzuführen ist, indem geprüft wird, ob der bestimmte Abweichungsparameter die erste Bedingung erfüllt. Anhand der Prüfung, ob der Abweichungsparameter die erste Bedingung erfüllt, wird festgelegt, ob Bedarf an einer Zufuhr von Wärme durch den zweiten Wärmeerzeuger besteht.

Erfindungsgemäß kann die Wärmeerzeugungseinrichtung in einer zweiten Betriebsart geregelt werden, in der im Schritt Feststellen, ob dem Wärmespeicher Wärme durch den zweiten Wärmeerzeuger zuzuführen ist, im Gegensatz zur ersten Betriebsart festgestellt wird, dass dem Wärmeerzeuger selbst dann keine Wärme durch den zweiten Wärmeerzeuger zuzuführen ist, wenn der bestimmte Abweichungsparameter die erste Bedingung erfüllt.

Somit wird durch das erfindungsgemäße Verfahren eine Betriebsart der Wärmeerzeugungseinrichtung bereitgestellt, in der eine Zufuhr von Wärme durch den zweiten Wärmeerzeuger in Abhängigkeit einer Zufuhr von Wärme durch den ersten Wärmeerzeuger unterdrückt werden kann. Somit kann z. B. das sogenannte Nachladen, oder Nachheizen des Wärmespeichers durch den zweiten Wärmeerzeuger unterdrückt bzw. unterbunden werden, wenn es möglich ist, dem Wärmespeicher durch den ersten Wärmeerzeuger Wärme zuzuführen oder, wenn davon ausgegangen werden kann, dass Wärme durch den ersten Wärmeerzeuger zugeführt werden kann.

Somit wird die Regelung einer zumindest bivalenten Wärmeerzeugungseinrichtung deutlich optimiert und ein Energieverbrauch des zweiten Wärmeerzeugers kann deutlich reduziert werden. Zusätzlich kann der Energieertrag des ersten Wärmeerzeugers, der dazu geeignet ist, zeitweise Wärme zu dem Wärmespeicher zuzuführen, effizienter genutzt werden. Somit kann eine Energiebilanz der Regelung der bivalenten Wärmeerzeugungseinrichtung deutlich optimiert werden.

Ist der erste Wärmeerzeuger ein Wärmeerzeuger, der abhängig von äußeren Faktoren, wie z. B. der Verfügbarkeit von Sonnen- oder Windenergie, dem Wärmespeicher Wärme zuführen kann und ist der zweite Wärmeerzeuger ein konventioneller Wärmeerzeuger, der z. B. durch Verbrennung eines Brennstoffs oder Umwandlung elektrischer Energie in Wärmeenergie dem Wärmespeicher Energie zuführen kann, kann durch die erfindungsgemäße Nachladeunterdrückung einer Wärmezufuhr durch den zweiten Wärmeerzeuger eine Effizienz der Nutzung des Energieertrags des ersten Wärmespeichers optimiert werden.

Vorzugsweise umfasst das erfindungsgemäße Verfahren weiterhin den Schritt des Umschaltens der Betriebsart der Wärmeerzeugungseinrichtung von der zweiten Betriebsart in die erste Betriebsart in Abhängigkeit einer Zufuhr von Wärme durch den ersten Wärmeerzeuger in dem ersten Betriebszustand.

Somit kann die Betriebsart der Wärmeerzeugungseinrichtung von der zweiten Betriebsart in die erste Betriebsart umgeschaltet werden, in der ein Bedarf an einer Zufuhr von Wärme zu dem Wärmespeicher durch den zweiten Wärmeerzeuger anhand der Prüfung, ob der bestimmte Abweichungsparameter die erste Bedingung erfüllt, festgestellt wird. Eine Nachladeunterdrückung einer Zufuhr von Wärme durch den zweiten Wärmeerzeuger in der zweiten Betriebsart der Wärmeerzeugungseinrichtung kann somit durch Umschalten von der zweiten in die erste Betriebsart ausgeschaltet werden.

Somit kann eine Komforteinbuße für einen Verbraucher vermieden werden, indem es ermöglicht ist, einen Bedarf an Zufuhr von Wärme zu dem Wärmespeicher zu ermöglichen, indem eine Nachladeunterdrückung ausgeschaltet werden kann.

Vorzugsweise wird in dem erfindungsgemäßen Verfahren weiterhin das Umschalten einer Betriebsart der Wärmeerzeugungseinrichtung, also das Umschalten von der ersten in die zweite Betriebsart und/oder das Umschalten der zweiten Betriebsart in die erste Betriebsart, in Abhängigkeit einer abgeschätzten zur Verfügung stehenden Wärmemenge für die Zufuhr von Wärme durch den ersten Wärmeerzeuger im ersten Betriebszustand ausgeführt.

Somit ist es möglich, das Umschalten einer Betriebsart der Wärmeerzeugungseinrichtung anhand einer abgeschätzten zur Verfügung stehenden Wärmemenge für die Zufuhr von Wärme durch den ersten Wärmeerzeuger auszuführen. Dies bedeutet, dass das Umschalten einer Betriebsart der Wärmeerzeugungseinrichtung, also z. B. das Ein- oder Ausschalten einer Nachladeunterdrückung, anhand einer momentanen Zufuhr von Wärme durch den ersten Wärmeerzeuger und/oder anhand einer abgeschätzten zur Verfügung stehenden Wärmemenge für eine andauernde Zufuhr von Wärme durch den ersten Wärmeerzeuger ausgeführt werden kann.

Vorzugsweise umfasst das Verfahren nach der vorliegenden Erfindung weiterhin den Schritt

- Ermitteln einer Wärmezufuhrdauer einer ununterbrochenen Wärmezufuhr durch den ersten Wärmeerzeuger im ersten Betriebszustand, wobei die Wärmezufuhrdauer vorzugsweise ein Zeitintervall angibt, in dem der erste Wärmeerzeuger dem Wärmespeicher im ersten Betriebszustand ununterbrochen Wärme zuführt, bis eine Zufuhr von Wärme durch den ersten Wärmeerzeuger beendet wird, wenn der erste Wärmeerzeuger einen zweiten Betriebszustand der zumindest zwei Betriebszustände des ersten Wärmeerzeugers einnimmt.

Somit kann eine Wärmezufuhrdauer einer ununterbrochenen Wärmezufuhr durch den ersten Wärmeerzeuger ermittelt werden. In einem ersten Betriebszustand des ersten Wärmeerzeugers wird dem Wärmespeicher durch den ersten Wärmeerzeuger vorzugsweise Wärme zugeführt, bis der erste Wärmeerzeuger den zweiten Betriebszustand einnimmt und eine Zufuhr von Wärme durch den ersten Wärmeerzeuger zu dem Wärmespeicher beendet wird. Da die Wärmezufuhrdauer des ersten Wärmeerzeugers vorzugsweise von einer überschüssigen Wärmemenge des ersten Wärmeerzeugers abhängt, die an den Wärmespeicher zum Zuführen von Wärme abgegeben werden kann, kann somit die Wärmemenge, bzw. ein Ertrag des ersten Wärmeerzeugers abgeschätzt werden.

Vorzugsweise wird im Verfahren nach der vorliegenden Erfindung der Schritt des Umschaltens einer Betriebsart der Wärmeerzeugungseinrichtung, also das Umschalten von zumindest der ersten in die zweite Betriebsart und/oder von der zweiten in die erste Betriebsart, in Abhängigkeit von einer Aktivierung von einer oder mehrerer Regelstufen ausgeführt.

Eine Mehrzahl von verschiedenen Regelstufen ermöglicht, dass die Regelung der Wärmeerzeugungseinrichtung, bzw. das Ein- und Ausschalten einer Nachladeunterdrückung, differenzierter in Abhängigkeit einer Zufuhr von Wärme durch den ersten Wärmeerzeuger und/oder durch eine abgeschätzte Wärmemenge einer Zufuhr von Wärme durch den ersten Wärmeerzeuger ausgeführt werden kann.

Wird der Schritt des Umschaltens einer Betriebsart der Wärmeerzeugungseinrichtung in Abhängigkeit von einer Aktivierung von einer oder mehreren Regelstufen ausgeführt, umfasst das Verfahren nach der vorliegenden Erfindung vorzugsweise weiterhin die Schritte:

- Aktivieren einer ersten Regelstufe, wenn der erste Wärmeerzeuger den ersten Betriebszustand von zumindest zwei Betriebszuständen einnimmt und dem Wärmespeicher Wärme zuführt, und/oder
- Feststellen, ob der Abweichungsparameter eine zweite Bedingung erfüllt,

wobei der Schritt des Umschaltens von der ersten in die zweite Betriebsart vorzugsweise ausgeführt wird, wenn die erste Regelstufe aktiviert ist und festgestellt wird, dass der Abweichungsparameter die zweite Bedingung erfüllt.

Somit kann die Regelung der Wärmeerzeugungseinrichtung zumindest in Abhängigkeit einer Aktivierung einer ersten Regelstufe ausgeführt werden, wobei nach der ersten Regelstufe ein Regelungsverfahren angewendet wird, indem von der ersten in die zweite Betriebsart umgeschaltet wird, also eine Nachladeunterdrückung durch den zweiten Wärmeerzeuger eingeschaltet wird, wenn die erste Regelstufe aktiviert ist und zusätzlich festgestellt werden kann, dass der bestimmte Abweichungsparameter eine zweite Bedingung erfüllt. Hierbei wird die erste Regelstufe erfindungsgemäß vorzugsweise dann aktiviert, wenn der erste Wärmeerzeuger dem Wärmespeicher im ersten Betriebszustand Wärme zuführt.

Somit kann eine Nachladeunterdrückung eingeschaltet werden, wenn konkreter Energieertrag am ersten Wärmeerzeuger zum Zuführen von Wärme zum Wärmespeicher verfügbar ist und Wärme zugeführt wird. Weiterhin kann eine Komforteinbuße für einen Verbraucher vermieden werden, indem zusätzlich geprüft wird, ob der Abweichungsparameter eine zweite Bedingung erfüllt, so dass nur von der ersten in die zweite Betriebsart umgeschaltet wird, wenn konkreter Ertrag des ersten Wärmeerzeugers verfügbar ist und eine Komforteinbuße vermieden ist.

Vorzugsweise umfasst das erfindungsgemäße Verfahren weiterhin den Schritt

- Festlegen einer ersten Nachlaufzeit, wenn eine Zufuhr von Wärme zu dem Wärmespeicher durch den ersten Wärmeerzeuger in dem ersten Betriebszustand ab einem ersten Zeitpunkt ununterbrochen bis zu einem zweiten Zeitpunkt ausgeführt wird und zu dem zweiten Zeitpunkt beendet wird, wenn der erste Wärmeerzeuger den zweiten Betriebszustand einnimmt, in Abhängigkeit einer zwischen dem ersten und dem zweiten Zeitpunkt ermittelten ersten Wärmezufuhrdauer, wobei das Verfahren vorzugsweise weiterhin den Schritt
- Deaktivieren der ersten Regelstufe umfasst, wenn dem Wärmespeicher seit dem zweiten Zeitpunkt keine Wärme durch den ersten Wärmeerzeuger zugeführt wird und seit dem zweiten Zeitpunkt ein Zeitintervall größer oder gleich der festgelegten ersten Nachlaufzeit abgelaufen ist.

Somit kann eine erste Nachlaufzeit anhand einer bestimmten Wärmezufuhrdauer festgelegt werden, wenn eine Wärmezufuhr durch den ersten Wärmeerzeuger zu dem Wärmespeicher zu einem zweiten Zeitpunkt beendet wird, nachdem ab einem ersten Zeitpunkt vor dem zweiten Zeitpunkt ununterbrochen Wärme zugeführt wurde. Hierbei kann die erste Nachlaufzeit in Abhängigkeit des Zeitintervalls zwischen dem ersten und dem zweiten Zeitpunkt vorzugsweise anhand einer vorbestimmten Abhängigkeit, z. B. als Funktion, festgelegt werden.

Weiterhin kann ein Zeitpunkt für eine Deaktivierung der ersten Regelstufe vorzugsweise bestimmt werden als ein Zeitpunkt, an dem die festgelegte Nachlaufzeit nach einem Beenden einer Wärmezufuhr durch den ersten Wärmeerzeuger abgelaufen ist. Somit kann eine erste Regelstufe in Abhängigkeit einer Zufuhr von Wärme durch den ersten Wärmeerzeuger aktiviert bleiben, selbst wenn die Zufuhr durch den ersten Wärmeerzeuger bereits beendet ist.

Vorzugsweise umfasst das erfindungsgemäße Verfahren weiterhin den Schritt - Aktivieren einer zweiten Regelstufe, wenn der erste Wärmeerzeuger dem Wärmespeicher Wärme im ersten Betriebszustand zuführt und die ermittelte Wärmezufuhrdauer einer ununterbrochenen Zufuhr von Wärme durch den ersten Wärmeerzeuger vorzugsweise mindestens einer vorbestimmten Mindestlaufzeit entspricht, wobei der Schritt des Umschaltens von der ersten in die zweite Betriebsart vorzugsweise ausgeführt wird, wenn die zweite Regelstufe aktiviert ist.

Dies ermöglicht das Umschalten von der ersten in die zweite Betriebsart, also das Einschalten einer Nachladeunterdrückung des zweiten Wärmeerzeugers, nur in Abhängigkeit einer Aktivierung einer zweiten Regelstufe, ohne das Erfordernis, dass der bestimmte Abweichungsparameter eine bestimmte Bedingung erfüllt. Somit wird eine Regelstufe bereitgestellt, in der eine Nachladeunterdrückung des zweiten Wärmeerzeugers unabhängig von dem bestimmten Abweichungsparameter ausgeführt werden kann.

Hierbei kann zur Sicherheit, um Komforteinbußen für den Verbraucher zu vermeiden, vorzugsweise eine Mindestlaufzeit einer Zufuhr von Wärme zu dem Wärmespeicher von dem ersten Wärmeerzeuger festgelegt werden, wobei die zweite Regelstufe vorzugsweise nur dann aktiviert wird, wenn eine Zufuhr von Wärme durch den ersten Wärmeerzeuger ununterbrochen seit einem Zeitraum größer oder gleich der festgelegten bzw. vorbestimmten Mindestlaufzeit ist.

Vorzugsweise umfasst das erfindungsgemäße Verfahren weiterhin den Schritt

- Deaktivieren der zweiten Regelstufe, wenn das Zuführen von Wärme zu dem Wärmespeicher durch den ersten Wärmeerzeuger unterbrochen oder beendet wird, wenn der erste Wärmeerzeuger den zweiten Betriebszustand einnimmt.

Da die zweite Regelstufe, wie oben beschrieben, unabhängig von dem bestimmten Abweichungsparameter aktiviert werden kann, so dass eine Nachladeunterdrückung gegebenenfalls unabhängig von dem bestimmten Abweichungsparameter eingeschaltet werden kann, wird vorzugsweise die zweite Regelstufe deaktiviert, wenn eine Wärmezufuhr durch den ersten Wärmeerzeuger unterbrochen oder beendet wird, so dass nach einem weiteren Aufnehmen einer Zufuhr von Wärme durch den ersten Wärmeerzeuger vorzugsweise erst nach erneutem Ablaufen der Mindestlaufzeit die zweite Regelstufe wieder aktiviert.

Das Verfahren zum Regeln einer Wärmeerzeugungseinrichtung wird vorzugsweise in Abhängigkeit einer ersten oder in Abhängigkeit einer zweiten oder in Abhängigkeit einer ersten und zweiten Regelstufe ausgeführt. In dem Fall, in dem sowohl die erste als auch die zweite Regelstufe zur Verfügung stehen sollen, führt eine Deaktivierung der ersten Regelstufe vorzugsweise dazu, dass nach Deaktivierung der zweiten Regelstufe noch die erste Regelstufe aktiv ist.

Vorzugsweise umfasst das erfindungsgemäße Verfahren zum Regeln einer Wärmeerzeugungseinrichtung weiterhin den Schritt

- Feststellen, ob der Abweichungsparameter eine dritte Bedingung erfüllt, wobei der Schritt des Umschaltens von der zweiten in die erste Betriebsart der Wärmeerzeugungseinrichtung vorzugsweise ausgeführt wird, wenn die erste Regelstufe nicht aktiviert ist bzw. deaktiviert ist oder festgestellt wird, dass der Abweichungsparameter die dritte Bedingung erfüllt.

Somit kann das Umschalten von der zweiten in die erste Betriebsart, bzw. das Ausschalten der Nachladeunterdrückung des zweiten Wärmeerzeugers, ausgeführt werden, wenn entweder die erste Regelstufe nicht aktiviert oder deaktiviert ist oder alternativ, wenn festgestellt wird, dass der Abweichungsparameter die dritte Bedingung erfüllt. Somit ist sichergestellt, dass bei aktivierter erster Regelstufe eine aktivierte Nachladeunterdrückung ausgeschaltet wird, wenn festgestellt wird, dass der Abweichungsparameter die dritte Bedingung erfüllt. Durch das Prüfen, ob der Abweichungsparameter die dritte Bedingung erfüllt, kann sichergestellt werden, dass ein Umschalten von der zweiten in die erste Betriebsart trotz aktivierter erster Regelstufe ausgeführt wird, wenn dadurch Komforteinbußen für einen Nutzer zu vermeiden sind.

Vorzugsweise wird der Schritt des Umschaltens von der zweiten in die erste Betriebsart, also das Ausschalten einer Nachladeunterdrückung, nicht ausgeführt, wenn oder solange die zweite Regelstufe aktiviert ist.

Somit kann eine Nachladeunterdrückung unabhängig von einer Aktivierung einer ersten Regelstufe oder unabhängig von dem ermittelten Abweichungsparameter aufrecht erhalten werden, solange die zweite Regelstufe aktiviert ist. Dies kann vorteilhaft sein, wenn die zweite Regelstufe, die anhand einer Mindestlaufzeit einer Wärmezufuhr durch den ersten Wärmeerzeuger aktiviert wird, sicherstellt, dass Komforteinbußen für einen Verbraucher vermieden werden können und ein Ausschalten einer Nachladeunterdrückung anhand der Überprüfung, ob der Abweichungsparameter die dritte Bedingung erfüllt, nicht erforderlich ist, da seit mindestens einer Dauer entsprechend der Mindestlaufzeit Wärme durch den ersten Wärmeerzeuger zugeführt wird.

Vorzugsweise wird der Schritt des Umschaltens von der zweiten in die erste Betriebsart der Wärmeerzeugungseinrichtung nach der vorliegenden Erfindung unabhängig von einer Aktivierung der ersten oder zweiten Regelstufe ausgeführt, wenn der ermittelte Speichertemperatur-Istwert $T_{IST}$ einen vorbestimmten Speichertemperatur-Mindestwert $T_{MIN}$ erreicht oder unterschreitet.

Der vorbestimmte Speichertemperatur-Mindestwerts $T_{MIN}$ gibt vorzugsweise eine erforderliche Speichertemperatur bzw. einen Mindestwert einer erforderlichen Speichertemperatur an, bei der Komforteinbußen für den Nutzer noch vermieden werden können. Dies entspricht nicht einer Regelung in Abhängigkeit des Abweichungsparameters, da eine Regelung anhand des Speichertemperatur-Mindestwerts $T_{MIN}$ unabhängig vom eingestellten Speichertemperatur-Sollwert $T_{SOLL}$ ist.

Bei einer Regelung, bei der eine Nachladeunterdrückung des zweiten Wärmeerzeugers nur ermöglicht wird, wenn eine Mindestkomforttemperatur im Wärmespeicher, z. B. ein vorbestimmter Speichertemperatur-Mindestwert $T_{MIN}$, erreicht oder unterschritten wird, kann sichergestellt werden, dass unabhängig von der Regelung anhand der ersten, zweiten, und/oder dritten Bedingung für den Abweichungsparameter und unabhängig von einer Aktivierung oder Deaktivierung einer ersten und/oder zweiten Regelstufe, Komforteinbußen für einen Verbraucher auf jeden Fall vermieden werden, wenn der vorbestimmte Speichertemperatur-Mindestwert $T_{MIN}$ anhand einer mindestens erforderlichen Komforttemperatur des thermischen Speichermediums im Wärmespeicher bestimmt wird. Sinkt die Temperatur im Wärmespeicher unter den vorbestimmten Speichertemperatur-Mindestwert $T_{MIN}$, wird vorzugsweise eine Nachladeunterdrückung des zweiten Wärmeerzeugers ausgeschaltet, so dass Wärme durch den zweiten Wärmeerzeuger zu dem Wärmespeicher zugeführt werden kann, um Komforteinbußen für den Verbraucher durch Erhöhen der Temperatur des thermischen Speichermediums im Wärmespeicher zu vermeiden.

Vorzugsweise umfasst das erfindungsgemäße Verfahren zum Regeln einer Wärmeerzeugungseinrichtung weiterhin den weiteren Schritt

- Festlegen einer zweiten Nachlaufzeit in Abhängigkeit einer zwischen einem dritten und einem vierten Zeitpunkt ermittelten zweiten Wärmezufuhrdauer und einer Restnachlaufzeit der ersten Nachlaufzeit, wenn das Zeitintervall zwischen dem zweiten und dem dritten Zeitpunkt kleiner der bestimmten ersten Nachlaufzeit ist und eine Zufuhr von Wärme zu dem Wärmespeicher durch den ersten Wärmeerzeuger in dem ersten Betriebszustand ab einem dritten Zeitpunkt nach dem zweiten Zeitpunkt ununterbrochen bis zu einem vierten Zeitpunkt ausgeführt wird und zu dem vierten Zeitpunkt beendet wird, wenn der erste Wärmeerzeuger den zweiten Betriebszustand einnimmt,

wobei vorzugsweise zwischen dem zweiten und dem dritten Zeitpunkt keine Wärme durch den ersten Wärmeerzeuger in dem zweiten Betriebszustand zu dem Wärmespeicher zugeführt wird,

die Restnachlaufzeit der ersten Nachlaufzeit vorzugsweise in Abhängigkeit der ersten Nachlaufzeit und dem Zeitintervall zwischen dem zweiten und dem dritten Zeitpunkt bestimmt wird, und

die erste Regelstufe vorzugsweise deaktiviert wird, wenn dem Wärmespeicher seit dem vierten Zeitpunkt keine Wärme durch den ersten Wärmeerzeuger zugeführt wird und seit dem vierten Zeitpunkt ein Zeitintervall größer oder gleich der bestimmten zweiten Nachlaufzeit abgelaufen ist.

Somit kann eine Nachlaufzeit nach dem Beenden einer Zufuhr von Wärme durch den ersten Wärmeerzeuger nicht nur anhand der letzten Wärmezufuhrdauer bestimmt werden, sondern unter Einbeziehung einer noch nicht abgelaufenen Restlaufzeit der vorherig bestimmten Nachlaufzeit.

Somit kann sichergestellt werden, dass bei einem Aufeinanderfolgen von Zeitintervallen, in denen ununterbrochen Wärme zu dem Wärmespeicher durch den ersten Wärmeerzeuger zugeführt wird, wobei zwischen den Zeitintervallen einer ununterbrochenen Wärmezufuhr durch den ersten Wärmeerzeuger eine jeweilige Restnachlaufzeit der jeweilig bestimmten Nachlaufzeit verbleibt, eine jeweilig letzte bestimmte Nachlaufzeit unter Berücksichtigung der Zeitdauern der Zyklen einer Wärmezufuhr und einem Ausbleiben einer Wärmezufuhr zu bestimmen.

Bei der Bestimmung einer jeweiligen Nachlaufzeit wird vorzugsweise bei der Bestimmung einer momentanen Nachlaufzeit kumuliert, wobei Restnachlaufzeiten einer vorherig bestimmten Nachlaufzeit vorzugsweise hinzuaddiert werden. Somit kann eine Nachladeunterdrückung gegebenenfalls aufrecht erhalten werden, selbst wenn die Verfügbarkeit einer Wärmemenge zur Zufuhr von Wärme zu dem Wärmespeicher durch den ersten Wärmeerzeuger zeitlich unbeständig ist.

Vorzugsweise wird hierbei eine maximale Nachlaufzeit, ein Nachlaufzeit-Maximalgrenzwert eingestellt, wobei bei dem Festlegen einer Nachlaufzeit höchstens eine Nachlaufzeit gleich dem eingestellten Nachlaufzeit-Maximalgrenzwert festgelegt wird, so dass bei der Bestimmung einer Nachlaufzeit vorzugsweise keine Restnachlaufzeit hinzuaddiert wird, die eine bestimmte Nachlaufzeit über dem eingestellten Maximalwert für eine Nachlaufzeit ergeben würde.

Das Verfahren zum Regeln einer Wärmeerzeugungseinrichtung nach der vorliegenden Erfindung umfasst vorzugsweise weiterhin den Schritt:

- Zurücksetzen einer Restnachlaufzeit einer festgelegten Nachlaufzeit, wenn der Schritt des Umschaltens von der zweiten in die erste Betriebsart zu einem fünften Zeitpunkt ausgeführt wird, bevor die bestimmte Nachlaufzeit seit Beenden einer Zufuhr von Wärme durch den ersten Wärmeerzeuger abgelaufen ist.

Somit kann sichergestellt werden, dass eine verbleibende Restnachlaufzeit auf den Wert Null zurückgesetzt werden kann, wenn von der zweiten in die erste Betriebsart umgeschaltet wird, also wenn eine Nachladeunterdrückung ausgeschaltet wird, z. B. weil eines der Kriterien für das Ausschalten der Nachladeunterdrückung vor Ablauf der Nachlaufzeit, trotz verbleibender Restnachlaufzeit, erfüllt ist.

Somit kann sichergestellt werden, dass nach einem Ausschalten der Nachladeunterdrückung bei einem erneuten Einschalten der Nachladeunterdrückung beim Umschalten von der ersten in die zweite Betriebsart oder bei einer erneuten Aktivierung der ersten Regelstufe aufgrund des zwischenzeitlichen Ausschaltens der Nachladeunterdrückung keine Restnachlaufzeit berücksichtigt wird, die bestimmt wurde, bevor die Nachladeunterdrückung ausgeschaltet wurde. Somit beginnt eine Kumulation bei einer Bestimmung einer Nachlaufzeit vorzugsweise von Neuem, wenn eine Nachladeunterdrückung erneut eingeschaltet wird.

Im Folgenden wird die Vorrichtung zum Regeln einer Wärmeerzeugungseinrichtung nach der vorliegenden Erfindung beschrieben, die dazu geeignet ist, zumindest eines der vorstehend beschriebenen Verfahren zum Regeln einer Wärmeerzeugungseinrichtung mit einem ersten Wärmeerzeuger, einem zweiten Wärmeerzeuger und einem Wärmespeicher zum Speichern von Wärme auszuführen. Hierbei werden die Vorteile der Vorrichtung zum Regeln einer Wärmeerzeugungseinrichtung nach der vorliegenden Erfindung nicht im Detail beschrieben, da die Vorteile den Vorteilen der oben beschriebenen Verfahrensschritte entsprechen.

Die Vorrichtung zum Regeln einer Wärmeerzeugungseinrichtung nach der vorliegenden Erfindung umfasst:

- eine Speichertemperatur-Istwert-Ermittelungseinrichtung zum Ermitteln zumindest eines Speichertemperatur-Istwerts $T_{IST}$, der von einer Temperatur in zumindest einem Teil des Wärmespeichers abhängt,
- ein Betriebszustand-Feststellmittel zum Feststellen, ob der erste Wärmeerzeuger den ersten Betriebszustand einnimmt,
- ein Speichertemperatur-Sollwert-Einstellungsmittel zum Einstellen eines Speichertemperatur-Sollwerts $T_{SOLL}$, der einen Sollwert der Speichertemperatur im Wärmespeicher angibt,
- ein Abweichungsparameter-Bestimmungsmittel zum Vergleichen des eingestellten Speichertemperatur-Sollwerts $T_{SOLL}$ mit dem ermittelten Speichertemperatur-Istwert $T_{IST}$ zum Bestimmen eines Abweichungsparameters zwischen dem eingestellten Speichertemperatur-Sollwert $T_{SOLL}$ und dem ermittelten Speichertemperatur-Istwert $T_{IST}$, und/oder
- ein Abweichungsparameter-Prüfmittel zum Feststellen anhand des bestimmten Abweichungsparameters, ob dem Wärmespeicher Wärme durch den zweiten Wärmeerzeuger zuzuführen ist, wobei in einer ersten Betriebsart der Wärmeerzeugungseinrichtung dem Wärmespeicher Wärme durch den zweiten Wärmeerzeuger zuzuführen ist, wenn der bestimmte Abweichungsparameter eine erste Bedingung erfüllt.

Des Weiteren ist die Vorrichtung zum Regeln einer Wärmeerzeugungseinrichtung nach der vorliegenden Erfindung dadurch gekennzeichnet, dass sie

- ein Betriebsart-Umschaltmittel zum Umschalten der Betriebsart der Wärmeerzeugungseinrichtung von der ersten Betriebsart in eine zweite Betriebsart in Abhängigkeit einer Zufuhr von Wärme durch den ersten Wärmeerzeuger im ersten Betriebszustand und zum Umschalten der zweiten Betriebsart in die erste Betriebsart in Abhängigkeit einer Zufuhr von Wärme durch den ersten Wärmeerzeuger im ersten Betriebszustand umfasst.

Erfindungsgemäß stellt das Abweichungsparameter-Prüfmittel in der zweiten Betriebsart der Wärmeerzeugungseinrichtung bei dem Feststellen, ob dem Wärmespeicher Wärme durch den zweiten Wärmeerzeuger zuzuführen ist, fest, dass dem Wärmespeicher keine Wärme durch den zweiten Wärmeerzeuger zuzuführen ist, selbst wenn der bestimmte Abweichungsparameter die erste Bedingung erfüllt.

Vorzugsweise ist das Betriebsart-Umschaltmittel dazu geeignet, das Umschalten einer Betriebsart der Wärmeerzeugungseinrichtung in Abhängigkeit einer abgeschätzten zur Verfügung stehenden Wärmemenge für die Zufuhr von Wärme durch den ersten Wärmeerzeuger im ersten Betriebszustand auszuführen. Vorzugsweise gilt dies für das Umschalten von der ersten in die zweite Betriebsart und das Umschalten von der zweiten Betriebsart in die erste Betriebsart.

Vorzugsweise umfasst die Vorrichtung zum Regeln einer Wärmeerzeugungseinrichtung nach der vorliegenden Erfindung weiterhin ein Wärmezufuhrdauer-Ermittelungsmittel zum Ermitteln einer Wärmezufuhrdauer einer ununterbrochenen Zufuhr von Wärme durch den ersten Wärmeerzeuger, wobei die ermittelte Wärmezufuhrdauer vorzugsweise ein Zeitintervall angibt, in dem der erste Wärmeerzeuger dem Wärmespeicher ununterbrochen Wärme zuführt, bis eine Zufuhr von Wärme durch den ersten Wärmeerzeuger beendet wird, wenn der erste Wärmeerzeuger einen zweiten Betriebszustand der zumindest zwei Betriebszustände des ersten Wärmeerzeugers einnimmt.

Vorzugsweise ist das Betriebsart-Umschaltmittel dazu geeignet, das Umschalten einer Betriebsart der Wärmeerzeugungseinrichtung in Abhängigkeit von einer Aktivierung von einer oder mehreren Regelstufen auszuführen, wobei die Vorrichtung zum Regeln der Wärmeerzeugungseinrichtung nach der vorliegenden Erfindung vorzugsweise weiterhin ein Regelstufen-Aktivierungsmittel zum Aktivieren und/oder Deaktivieren der einen oder mehreren Regelstufen umfasst.

Vorzugsweise ist das Regelstufen-Aktivierungsmittel dazu geeignet, eine zweite Regelstufe zu aktivieren, wenn der erste Wärmeerzeuger dem Wärmespeicher im ersten Betriebszustand Wärme zuführt und die von dem Wärmezufuhrdauer-Ermittelungsmittel ermittelte Wärmezufuhrdauer einer ununterbrochenen Zufuhr von Wärme durch den ersten Wärmeerzeuger im ersten Betriebszustand mindestens einer vorbestimmten Mindestlaufzeit entspricht, wobei das Betriebsart-Umschaltmittel vorzugsweise von der ersten in die zweite Betriebsart umschaltet, wenn die zweite Regelstufe aktiviert ist, und das Regelstufen-Aktivierungsmittel vorzugsweise weiterhin dazu geeignet ist, die zweite Regelstufe zu deaktivieren, wenn das Zuführen von Wärme zu dem Wärmespeicher durch den ersten Wärmeerzeuger unterbrochen oder beendet wird, wenn der erste Wärmeerzeuger den zweiten Betriebszustand einnimmt.

Vorzugsweise umfasst die Vorrichtung zum Regeln einer Wärmeerzeugungseinrichtung weiterhin ein Nachlaufzeit-Festlegungsmittel zum Festlegen einer ersten Nachlaufzeit, wenn eine Zufuhr von Wärme zu dem Wärmespeicher durch den ersten Wärmeerzeuger im ersten Betriebszustand ab einem ersten Zeitpunkt ununterbrochen bis zu einem zweiten Zeitpunkt ausgeführt wird und zu dem zweiten Zeitpunkt beendet wird, wenn der erste Wärmeerzeuger den zweiten Betriebszustand einnimmt, vorzugsweise in Abhängigkeit einer zwischen dem ersten und dem zweiten Zeitpunkt ermittelten ersten Wärmezufuhrdauer, wobei das Regelstufen-Aktivierungsmittel vorzugsweise dazu geeignet ist, eine erste Regelstufe zu aktivieren, wenn der erste Wärmeerzeuger im ersten Betriebszustand dem Wärmespeicher Wärme zuführt, wobei das Betriebsart-Umschaltmittel vorzugsweise von der ersten in die zweite Betriebsart umschaltet, wenn die erste Regelstufe aktiviert ist und das Abweichungsparameter-Prüfmittel feststellt, dass der Abweichungsparameter eine zweite Bedingung erfüllt, und dass das Regelstufen-Aktivierungsmittel vorzugsweise weiterhin dazu geeignet ist, die erste Regelstufe zu deaktivieren, wenn dem Wärmespeicher seit dem zweiten Zeitpunkt keine Wärme durch den ersten Wärmeerzeuger zugeführt wird und seit dem zweiten Zeitpunkt ein Zeitintervall größer oder größergleich der bestimmten ersten Nachlaufzeit abgelaufen ist.

Vorzugsweise ist das Abweichungsparameter-Prüfmittel weiterhin dazu geeignet, festzustellen, ob der Abweichungsparameter eine dritte Bedingung erfüllt, wobei das Betriebsart-Umschaltmittel vorzugsweise von der zweiten in die erste Betriebsart der Wärmeerzeugungseinrichtung umschaltet, wenn die erste Regelstufe nicht aktiviert ist oder das Abweichungsparameter-Prüfmittel festgestellt, dass der Abweichungsparameter die dritte Bedingung erfüllt.

Vorzugsweise schaltet das Betriebsart-Umschaltmittel nicht von der zweiten in die erste Betriebsart der Wärmeerzeugungseinrichtung um, wenn die zweite Regelstufe aktiviert ist.

Vorzugsweise ist das Betriebsart-Umschaltmittel weiterhin dazu geeignet, von der zweiten in die erste Betriebsart der Wärmeerzeugungseinrichtung unabhängig von einer Aktivierung der einen oder mehreren Regelstufen umzuschalten, wenn der ermittelte Speichertemperatur-Istwert $T_{IST}$ einen vorbestimmten Speichertemperatur-Mindestwert $T_{MIN}$ erreicht oder unterschreitet.

Vorzugsweise ist das Nachlaufzeit-Festlegungsmittel weiterhin dazu geeignet, eine zweite Nachlaufzeit in Abhängigkeit einer zwischen einem dritten und einem vierten Zeitpunkt ermittelten zweiten Wärmezufuhrdauer und einer Restnachlaufzeit der ersten Nachlaufzeit zu bestimmen, wenn das Zeitintervall zwischen dem zweiten und dem dritten Zeitpunkt kleiner der bestimmten ersten Nachlaufzeit ist und eine Zufuhr von Wärme zu dem Wärmespeicher durch den ersten Wärmeerzeuger im ersten Betriebszustand ab einem dritten Zeitpunkt nach dem zweiten Zeitpunkt ununterbrochen bis zu einem vierten Zeitpunkt ausgeführt wird und zu dem vierten Zeitpunkt beendet wird, wenn der erste Wärmeerzeuger den zweiten Betriebszustand einnimmt, wobei vorzugsweise zwischen dem zweiten und dem dritten Zeitpunkt im zweiten Betriebszustand des ersten Wärmeerzeugers keine Wärme durch den ersten Wärmeerzeuger zu dem Wärmespeicher zugeführt wird, die Restnachlaufzeit der ersten Nachlaufzeit vorzugsweise in Abhängigkeit der ersten Nachlaufzeit und dem Zeitintervall zwischen dem zweiten und dem dritten Zeitpunkt bestimmt wird, und die erste Regelstufe vorzugsweise deaktiviert wird, wenn dem Wärmespeicher seit dem vierten Zeitpunkt keine Wärme durch den ersten Wärmeerzeuger zugeführt wird und seit dem vierten Zeitpunkt ein Zeitintervall größer oder größer-gleich der bestimmten zweiten Nachlaufzeit abgelaufen ist.

Vorzugsweise umfasst die Vorrichtung zum Regeln einer Wärmeerzeugungseinrichtung nach der vorliegenden Erfindung weiterhin ein Restnachlaufzeit-Zurücksetzmittel zum Zurücksetzen einer Restnachlaufzeit einer von dem Nachlaufzeit-Festlegungsmittel festgelegten Nachlaufzeit, vorzugsweise wenn das Betriebsart-Umschaltmittel von der zweiten in die erste Betriebsart zu einem fünften Zeitpunkt umschaltet, bevor die bestimmte Nachlaufzeit seit Beenden einer Zufuhr von Wärme durch den ersten Wärmeerzeuger, wenn der erste Wärmeerzeuger den zweiten Betriebszustand einnimmt, abgelaufen ist.

Zusätzlich umfasst die Vorrichtung zum Regeln einer Wärmeerzeugungseinrichtung vorzugsweise weiterhin Mittel zum Einstellen der ersten Bedingung, der zweiten Bedingung, der dritten Bedingung, der Mindestlaufzeit zur Aktivierung einer zweiten Regelstufe, dem Speichertemperatur-Mindestwert $T_{MIN}$ und/oder einer maximalen Nachlaufzeit. Somit kann gewährleistet werden, dass alle für das Regelungsverfahren verwendeten Parameter vorzugsweise manuell oder gegebenenfalls prozessgesteuert beeinflusst, verändert und/oder eingestellt werden können, um das Regelungsverfahren den Erfordernissen der Anlage und/oder den Komfortvorstellungen eines Nutzers anpassen zu können.

**Kurze Beschreibung der Figuren**

Fig. 1 zeigt eine bivalente Wärmeerzeugungseinrichtung in einer Ausführungsform mit einem Solarkollektor als erstem Wärmeerzeuger und einem Brenner als zweitem Wärmeerzeuger.

Fig. 2A und Fig. 2B zeigen ein Ablaufdiagramm einer Regelung eines zweiten Wärmeerzeugers nach einem ersten Ausführungsbeispiel des Verfahrens zum Regeln einer Wärmeerzeugungseinrichtung nach der vorliegenden Erfindung.

Fig. 3A bis Fig. 3D zeigen ein Ablaufdiagramm einer Regelung eines ersten Wärmeerzeugers nach einem ersten Ausführungsbeispiel eines Verfahrens zum Regeln einer Wärmeerzeugungseinrichtung nach der vorliegenden Erfindung.

Fig. 4 zeigt ein Ablaufdiagramm einer Steuerung des Umschaltens von einer ersten Betriebsart in eine zweite Betriebsart und von einer zweiten Betriebsart in eine erste Betriebsart der Wärmeerzeugungseinrichtung nach einem ersten Ausführungsbeispiel des Verfahrens zum Regeln einer Wärmeerzeugungseinrichtung nach der vorliegenden Erfindung.

Fig. 5 zeigt eine Ausführungsform einer Vorrichtung zum Regeln einer Wärmeerzeugungseinrichtung nach der vorliegenden Erfindung.

**Detaillierte Beschreibung der Figuren und bevorzugter Ausführungsbeispiele der vorliegenden Erfindung**

Im Folgenden werden bevorzugte Ausführungsbeispiele des Verfahrens zum Regeln einer Wärmeerzeugungseinrichtung und bevorzugte Ausführungsformen der Vorrichtung zum Regeln einer Wärmeerzeugungseinrichtung nach der vorliegenden Erfindung anhand der Figuren beschrieben. Hierbei werden die bevorzugten Ausführungsbeispiele des Verfahrens und bevorzugte Ausführungsformen der Vorrichtung nach der vorliegenden Erfindung in Bezug auf eine bivalente Wärmeerzeugungseinrichtung mit einem Brenner als zweiten Wärmeerzeuger und einem Solarkollektor als ersten Wärmeerzeuger beschrieben.

Die vorliegende Erfindung ist jedoch nicht auf bivalente Wärmeerzeugungseinrichtung mit einem Brenner und einem Solarkollektor beschränkt, sondern vielmehr sind das Verfahren und die Vorrichtung nach der vorliegenden Erfindung dazu geeignet, eine Wärmeerzeugungseinrichtung zu regeln, die zumindest einen ersten Wärmeerzeuger, der dazu geeignet ist, zeitweise Wärme zu einem Wärmespeicher der Wärmeerzeugungseinrichtung zuzuführen, und zumindest einen zweiten Wärmeerzeuger, der dazu geeignet ist, nach Bedarf dem Wärmespeicher der Wärmeerzeugungseinrichtung Wärme zuzuführen, umfasst. Für einen zweiten Wärmeerzeuger können jegliche Wärmeerzeuger genutzt werden, die dazu geeignet sind, dem Wärmespeicher Wärme zuzuführen, sobald dies erforderlich ist, indem z. B. Wärmeenergie durch Verbrennung eines Brennstoffs, z. B. eines fossilen Brennstoffs wie Gas oder Öl oder andere Brennstoffe, oder durch Umwandlung von elektrischer Energie in Wärmeenergie erzeugt werden kann.

Als erster Wärmeerzeuger eignen sich eine jegliche Art von Wärmeerzeugern, die dazu geeignet sind, zumindest zeitweise Wärmeenergie zu dem Wärmespeicher zuzuführen, z. B. in Abhängigkeit äußerer Faktoren wie der Verfügbarkeit von Sonnen- oder Windenergie. Des Weiteren eignet sich das Verfahren zum Regeln einer Wärmeerzeugungseinrichtung für jegliche Wärmeerzeugungseinrichtungen, die zumindest zwei Wärmeerzeuger umfassen, wobei dem Wärmespeicher der Wärmeerzeugungseinrichtung bevorzugt von einem der Wärmeerzeuger Wärme zugeführt wird und ein weiterer oder mehrere weitere Wärmeerzeuger dazu geeignet sind, eine Wärmeerzeugung eines oder mehrerer erster Wärmeerzeuger zu ergänzen oder zu unterstützen.

Fig. 1 zeigt eine bivalente Wärmeerzeugungseinrichtung mit einem Solarkollektor 20 als erstem Wärmeerzeuger und einem Brenner 10 als zweitem Wärmeerzeuger, wobei sowohl der Brenner 10 als auch der Solarkollektor 20 dazu geeignet sind, einem Wärmespeicher 30 bzw. einem thermischen Speichermedium 32 im Wärmespeicher 30 Wärme zuzuführen. Der Solarkollektor 20 umfasst einen Kollektorspeicher 21, der mit einem thermischen Speichermedium 24 gefüllt ist, eine Kollektorkreispumpe 22 und eine Solarkollektorsensoreinrichtung 23. Der Wärmespeicher umfasst zusätzliche eine Wärmespeichersensoreinrichtung 31, durch die eine Speichertemperatur bzw. ein Speichertemperatur-Istwert $T_{IST}$ ermittelt werden kann.

Des Weiteren umfasst die Wärmeerzeugungseinrichtung eine Wärmeerzeugungssteuerungseinrichtung 40 mit einer Brennersteuerungseinrichtung 42 und einer Solarkollektorsteuerungseinrichtung 41. Wie in Fig. 1 dargestellt, sind sowohl die Brennersteuerungseinrichtung 42 als auch die Solarkollektorsteuerungseinrichtung 41 mit der Wärmespeichersensoreinrichtung 31 verbunden, um auf den ermittelten Speichertemperatur-Istwert $T_{IST}$ zugreifen zu können.

In diesem Ausführungsbeispiel greifen die Brennersteuerungseinrichtung 42 und die Solarkollektorsteuerungseinrichtung 41 auf die gleiche Wärmespeichersensoreinrichtung 31, also auf den gleichen ermittelten Speichertemperatur-Istwert $T_{IST}$ zurück. Jedoch ist die vorliegende Erfindung nicht auf Ausführungsbeispiele beschränkt, in denen die Brennersteuerungseinrichtung 42 und die Solarkollektorsteuerungseinrichtung 41 auf die gleiche Wärmespeichersensoreinrichtung 31 zurückgreifen. Vielmehr ist es gleichfalls möglich, dass der Wärmespeicher eine Vielzahl von Mitteln umfasst zum Ermitteln einer Speichertemperatur in zumindest einem Teil des Wärmespeichers, wobei die Brennersteuerungseinrichtung 42 und die Solarkollektorsteuerungseinrichtung 41 auf jeweils unterschiedliche, in verschiedenen Teilen des Wärmespeichers ermittelten Speichertemperatur-Istwerten $T_{IST}$ zurückgreifen.

So kann z. B. die Brennersteuerungseinrichtung 42 auf einen oder mehrere z.B. in dem oberen Teil des Wärmespeichers 30 ermittelte Speichertemperatur-Istwerte $T_{IST}$ zugreifen, wobei die Solarkollektorsteuerungseinrichtung 41 auf einen oder mehrere z.B. in anderen Teilen des Wärmespeichers 30 ermittelte Speichertemperatur-Istwerte $T_{IST}$ zurückgreifen.

Des Weiteren umfasst die Wärmeerzeugungseinrichtung einen Wärmetauscher 50, über den Wärme zwischen dem thermischen Speichermedium 24 im Kollektorspeicher 21, bzw. im Kollektorkreislauf (umfassend Kollektorrücklauf, Kollektorvorlauf und Kollektorspeicher 21), und dem thermischen Speichermedium 32 Wasser im Wärmespeicher 30 ausgetauscht werden kann.

Das Regelungsverfahren der Wärmeerzeugungseinrichtung nach einem ersten Ausführungsbeispiel der vorliegenden Erfindung ist so ausgelegt, dass eine von einem Nutzer der Wärmeerzeugungseinrichtung vorgegebene bzw. eingestellte Warmwasser-Solltemperatur im Wärmespeicher 30, der mit Wasser als thermischem Speichermedium 32 gefüllt ist, in einem eingestellten Zeitfenster erreicht und gehalten wird, bzw. dass die vom Nutzer eingestellte Warmwasser-Solltemperatur nur geringfügig unterschritten werden kann. Dies hat wie oben beschrieben zur Folge, dass die Wärmeerzeugungseinrichtung bereits bei geringen Unterschreitungen der Solltemperatur im Wärmespeicher das thermische Speichermedium 32 im Wärmespeicher durch Zufuhr von Wärme durch den Brenner 10 nachlädt bzw. nachheizt.

Erfindungsgemäß kann dieses Nachheizen durch den Brenner 10 durch das vorteilhafte Regelungsverfahren nach der vorliegenden Erfindung unterdrückt werden, wenn voraussichtlich ein erforderlicher Warm-wasserbedarf, der sich an der eingestellten Solltemperatur orientiert, durch Solarertrag gedeckt werden kann. Somit bringt das erfindungsgemäße Verfahren zum Regeln der Wärmeerzeugungseinrichtung eine höhere solare Deckungsrate und zusätzlich einen reduzierten Energieverbrauch des Brenners 10, so dass Brennstoff bzw. fossiler Brennstoff eingespart werden kann. Dies führt zu einer niedrigeren Emissionsrate.

Die erfindungsgemäße Unterdrückung einer Nachladung durch den Brenner 10 (als zweiten Wärmeerzeuger), im Folgenden kurz Nachladeunterdrückung genannt, erfolgt in zwei Regelstufen.

In der ersten Regelstufe der Nachladeunterdrückung wird eine Regelabweichung zwischen dem eingestellten Speichertemperatur-Sollwert $T_{SOLL}$ und einem ermittelten Speichertemperatur-Istwert $T_{IST}$ bestimmt. Diese Regelabweichung, im Folgenden Abweichungsparameter genannt, bestimmt sich als:

$$\Delta T = \quad T_{SOLL} - T_{IST}$$

Liegt der ermittelte Speichertemperatur-Istwert $T_{IST}$ oberhalb oder nur geringfügig (bis zu einer Abweichung $\Delta T_2$) unterhalb der Warmwasser-Solltemperatur (Speichertemperatur-Sollwert $T_{SOLL}$) und liegt gleichzeitig eine Vermutung nahe, dass Solarertrag erzielt werden kann, wird die Nachladeunterdrückung aktiviert. Die erwähnte Vermutung, ob Solarertrag erzielt werden kann, basiert auf einer Überprüfung einfacher Kriterien und/oder Bedingungen, die im Folgenden beschrieben sind.

Wenn ermittelt wird, dass ein momentaner Abweichungsparameter $\Delta T$ größer oder größer-gleich einem weiteren Abweichungsparameter $\Delta T_3$ ist, oder wenn die im Folgenden beschriebenen Bedingungen zur Nachladeunterdrückung nicht mehr erfüllt sind, wird die Nachladeunterdrückung de-aktiviert (Nachladeunterdrückung aktiv → Nachladeunterdrückung inaktiv).

Somit umfasst die Wärmeerzeugungseinrichtung nach der vorliegenden Erfindung zumindest zwei Betriebsarten, wobei bei der ersten Betriebsart eine Nachladeunterdrückung inaktiv bzw. deaktiviert ist und eine zweite Betriebsart, bei der die Nachladeunterdrückung aktiv bzw. aktiviert ist.

In der ersten Betriebsart bei inaktiver Nachladeunterdrückung wird die Brennersteuerung anhand eines ersten Abweichungsparametergrenzwerts $\Delta T_1$ ermittelt. Fällt der ermittelte momentane Speichertemperatur-Istwert $T_{IST}$ unter den eingestellten Speichertemperatur-Sollwert $T_{SOLL}$, so dass der bestimmte momentane Abweichungsparameter $\Delta T$ eine erste Bedingung erfüllt, wird in der ersten Betriebsart der Wärmeerzeugungseinrichtung bei deaktivierter Nachladeunterdrückung Wärme durch den Brenner 10 zu dem Wärmespeicher 30 zugeführt, um die Speichertemperatur wieder über den eingestellten Speichertemperatur-Sollwert $T_{SOLL}$ zu erhöhen.

Die erste Bedingung für den Abweichungsparameter $\Delta T$ ist:

$$\Delta T > \Delta T_1.$$

In der zweiten Betriebsart der Wärmeerzeugungseinrichtung, also bei aktivierter Nachladeunterdrückung, wird das Nachladen durch den Brenner 10 unterdrückt, so dass ein Nachladen nicht gestartet wird, selbst wenn der Abweichungsparameter $\Delta T$ die erste Bedingung erfüllt.

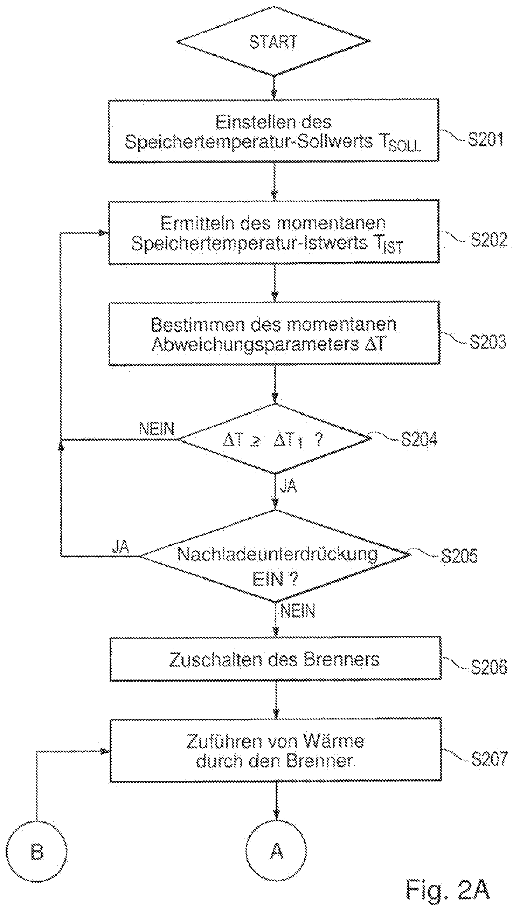

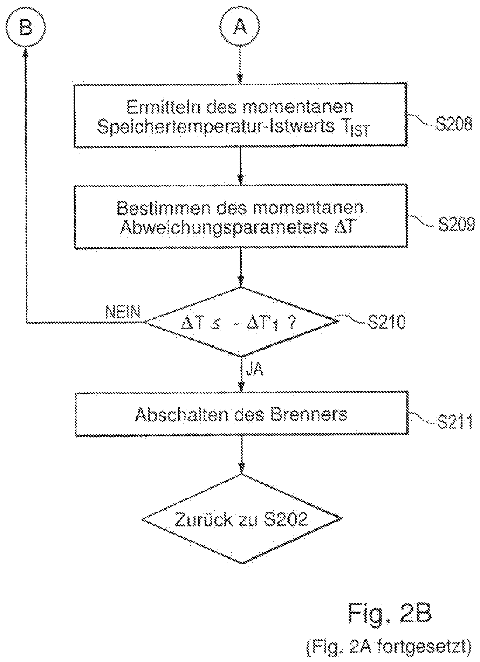

Ein Ablaufdiagramm der Regelung des Brenners 10 nach diesem ersten Ausführungsbeispiel des Verfahrens zu Regelung einer Wärmeerzeugungseinrichtung ist in Fig. 2A und Fig. 2B dargestellt. Die Regelung des Brenners 10 umfasst die Schritte S201 Einstellen des Speichertemperatur-Sollwerts $T_{SOLL}$, S202 Ermitteln des momentanen Speichertemperatur-Istwerts $T_{IST}$, S203 Bestimmen des momentanen Abweichungsparameters $\Delta T$, S204 Prüfen, ob der Abweichungsparameter $\Delta T$ die erste Bedingung erfüllt, S205 Prüfen, ob eine Nachladeunterdrückung aktiviert ist, S206 Zuschalten des Brenners 10, S207 Zuführen von Wärme durch den Brenner 10, S208 Ermitteln des momentanen Speichertemperatur-Istwerts $T_{IST}$ bei zugeschaltetem Brenner 10, S209 Bestimmen des momentanen Abweichungsparameters $\Delta T$ bei zugeschaltetem Brenner 10, S210 Prüfen, ob der momentane Abweichungsparameter $\Delta T$ eine Brenner-Ausschaltbedingung erfüllt, und S211 Abschalten des Brenners 10.

Im Schritt S201 wird ein Sollwert $T_{SOLL}$ der Speichertemperatur, gegebenenfalls durch einen Nutzer der Wärmeerzeugungseinrichtung, eingestellt.

Im nächsten Schritt S202 wird eine momentane Temperatur des thermischen Speichermediums 32 im Wärmespeicher (in diesem Ausführungsbeispiel Wasser) ermittelt, der momentane Speichertemperatur-Istwert $T_{IST}$.

Durch Vergleich des eingestellten Speichertemperatur-Sollwerts $T_{SOLL}$ und des in Schritt S202 ermittelten momentanen Speichertemperatur-Istwerts $T_{IST}$ wird eine momentaner Abweichungsparameter $\Delta T$ zwischen dem eingestellten Speichertemperatur-Sollwert $T_{SOLL}$ und dem ermittelten momentanen Speichertemperatur-Istwert $T_{IST}$ in Schritt S203 bestimmt. Der Abweichungsparameter $\Delta T$ beschreibt hierbei die Differenz zwischen Speichertemperatur-Sollwert $T_{SOLL}$ und ermitteltem momentanen Speichertemperatur-Istwert $T_{IST}$. Die vorliegende Erfindung ist jedoch nicht auf Abweichungsparameter beschränkt, die durch Bestimmung einer Differenz bestimmt werden; so sind z. B. weitere Ausführungsbeispiele möglich, bei denen ein Abweichungsparameter in einer nicht-linearen Abhängigkeit einer Regelabweichungsdifferenz gebildet wird.

Nach Bestimmen des momentanen Abweichungsparameters $\Delta T$ in Schritt S203 wird in Schritt S204 geprüft, ob der bestimmte momentane Abweichungsparameter $\Delta T$ die erste Bedingung erfüllt. Hierbei wird geprüft, ob der bestimmte momentane Abweichungsparameter $\Delta T$ einen ersten Abweichungsparameter-Grenzwert $\Delta T_1$ erreicht oder überschritten hat. Der hier erwähnte Abweichungsparametergrenzwert $\Delta T_1$ entspricht der in Bezug auf den Stand der Technik beschriebenen Brenner-Ausschalttemperaturdifferenz.

Wird bei der Prüfung in Schritt S204 festgestellt, dass der Abweichungsparameter $\Delta T$ die erste Bedingung nicht erfüllt, wird erneut durch Wiederholung des Schritts S202 ein momentaner Speichertemperatur-Istwert $T_{IST}$ zu einem späteren Zeitpunkt ermittelt. Das Ermitteln des momentanen Speichertemperatur-Istwerts $T_{IST}$ wird entweder kontinuierlich durchgeführt, um den Speichertemperatur-Istwert $T_{IST}$ als Funktion der Zeit $t$ zu ermitteln, oder durch periodisches Ermitteln des momentanen Speichertemperatur-Istwerts $T_{IST}$ nach vorbestimmten Zeitintervallen, um den Speichertemperatur-Istwert $T_{IST}$ als Stufenfunktion der Zeit $t$ zu ermitteln.

Wird im Schritt S204 bei dem Überprüfen, ob der bestimmte momentane Abweichungsparameter $\Delta T$ die erste Bedingung erfüllt, festgestellt, dass der bestimmte momentane Abweichungsparameter $\Delta T$ die erste Bedingung erfüllt, wird im nächsten Schritt S205 überprüft, ob eine Nachladeunterdrückung aktiviert ist, also ob sich die Wärmeerzeugungseinrichtung in der zweiten Betriebsart befindet. Wird hierbei festgestellt, dass eine Nachladeunterdrückung nicht aktiviert ist oder deaktiviert ist, wird im nächsten Schritt S206 der Brenner 10 zugeschaltet, um dem Wärmespeicher 30 bzw. dem Wasser als thermischem Speichermedium 32 im Wärmespeicher 30 Wärme zuzuführen und den Speichertemperatur-Istwert $T_{IST}$ wieder über den Speichertemperatur-Sollwert $T_{SOLL}$ zu erhöhen, da der Abweichungsparameter $\Delta T$ die erste Bedingung erfüllt, also die Bedingung zum Zuschalten des Brenners in der ersten Betriebsart der Wärmeerzeugungseinrichtung.

Wird jedoch in Schritt S205 festgestellt, dass eine Nachladeunterdrückung aktiviert ist, bzw. aktiv ist, also dass sich die Wärmeerzeugungseinrichtung in der zweiten Betriebsart befindet, wird das Zuschalten des Brenners 10 unterdrückt, der Brenner 10 wird somit nicht zugeschaltet, obwohl der Abweichungsparameter $\Delta T$ die erste Bedingung erfüllt. In der ersten Betriebsart der Wärmeerzeugungseinrichtung wird nach einem Zuschalten des Brenners in Schritt S206, wenn festgestellt wird, dass eine Nachladeunterdrückung nicht aktiv ist und der Abweichungsparameter $\Delta T$ die erste Bedingung erfüllt, dem Wärmespeicher 30 durch den Brenner 10 in Schritt S207 Wärme zugeführt, wobei im Schritt S208 der momentane Speichertemperatur-Istwert $T_{IST}$ bei zugeschaltetem Brenner 10 ermittelt wird.

Durch Vergleich des in Schritt S208 ermittelten momentanen Speichertemperatur-Istwerts $T_{IST}$ mit dem in Schritt S201 eingestellten Speichertemperatur-Sollwert $T_{SOLL}$ wird bei zugeschaltetem Brenner 10 in Schritt S209 erneut ein momentaner Abweichungsparameter $\Delta T$ analog zu Schritt S203 bestimmt.

Nach der hier benutzten Definition des Abweichungsparameters $\Delta T = T_{SOLL} \square T_{IST}$ wird der Abweichungsparameter $\Delta T$ negativ, sobald der Speichertemperatur-Istwert $T_{IST}$ den Speichertemperatur-Sollwert $T_{SOLL}$ übersteigt. In Schritt S210 wird überprüft, ob der bei zugeschaltetem Brenner 10 fallende Abweichungsparameter $\Delta T$ die Brennerausschalt-bedingung $\Delta T \leq -\Delta T_1'$ erfüllt. $\Delta T_1'$ entspricht somit der Brenner-Ausschalttemperaturdifferenz. Solange der bestimmte momentane Abweichungsparameter $\Delta T$ die Brennerausschaltbedingung nicht erfüllt, wird weiterhin Wärme durch den Brenner 10 zu dem Wärmespeicher 30 zugeführt (S207). Wird in Schritt S210 festgestellt, dass der bestimmte momentane Abweichungsparameter $\Delta T$ die Brennerausschaltbedingung erfüllt, also $\Delta T \leq -\Delta T_1'$, wird der Brenner in Schritt S211 Abschalten des Brenners 10 wieder abgeschaltet.

Für einen erneuten Zyklus wird erneut in Schritt S202 ein momentaner Speichertemperatur-Istwert $T_{IST}$ bei abgeschaltetem Brenner 10 ermittelt. Hierbei ist der Schritt S201 Einstellen des Speichertemperatur-Sollwerts $T_{SOLL}$ nicht in dem Brennerregelungszyklus bzw. in der Wiederholung der Brennerregelungszyklen aufgeführt, da es im Normalfall für die Wirkungsweise der Regelung nur erforderlich ist, dass ein Speichertemperatur-Sollwert $T_{SOLL}$ einmal eingestellt ist. Jedoch ist die vorliegende Erfindung nicht auf das einmalige Einstellen des Speichertemperatur-Sollwerts $T_{SOLL}$ wie in Fig. 2A dargestellt beschränkt, sondern vielmehr kann zu jedem oder einem beliebigen Zeitpunkt erneut ein veränderter, neuer Speichertemperatur-Sollwert $T_{SOLL}$ eingestellt werden, sowohl bei zugeschaltetem als auch bei abgeschaltetem Brenner, wobei sich die Schritte S204 und S210 bzw. die Schritte S203 und S209 in einem solchen Fall nach erneutem Einstellen des Speichertemperatur-Sollwerts $T_{SOLL}$ analog zu Schritt S201 nach dem neu eingestellten Speichertemperatur-Sollwert $T_{SOLL}$ orientieren.

Nach dem Regelverfahren des Brenners 10 wie in Fig. 2A und Fig. 2B dargestellt, wird der Wärmespeicher 30 bei aktivierter Nachladeunterdrückung, also bei einem Betrieb der Wärmeerzeugungseinrichtung der zweiten Betriebsart, nicht bereits $\Delta T_1$ unterhalb der Solltemperatur bzw. dem Speichertemperatur-Sollwert $T_{SOLL}$ nachgeladen, sondern erst $\Delta T_3$ unterhalb des Speichertemperatur-Sollwerts $T_{SOLL}$, wenn das Regelungsverfahren nach der vorliegenden Erfindung in einer ersten Regelstufe ausgeführt wird. Dies entspricht einer Verzögerung des Nachladebeginns, also einer Nachladeunterdrückung, die mit einer Bereitstellung des Brenners 10 verglichen werden kann. Da der Warmwasserkomfort für einen Nutzer der Wärmeerzeugungseinrichtung in dieser ersten Regelungsstufe in nahezu vollem Umfang bestehen bleibt, wenn $\Delta T_1$ entsprechend gewählt ist, kann die erste Regelstufe bereits bei relativ ungenauen bzw. vagen Vermutungen oder Prognosen über einen erwarteten Solarertrag aktiviert werden.

Neben der ersten Regelstufe kann das Verfahren der vorliegenden Erfindung zum Regeln einer Wärmeerzeugungseinrichtung weiterhin in einer zweiten Regelstufe ausgeführt werden, wobei in der zweiten Regelstufe eine Nachladeunterdrückung solange aktiviert bleibt und eine Nachladung durch den Brenner 10 verhindert, bis nur noch eine einstellbare Mindestkomfort-temperatur aus der Sicht des Verbrauchers, im Folgenden Speichertemperatur-Mindestwert $T_{MIN}$ genannt, ermittelt werden kann. Dies bedeutet, dass eine Nachladeunterdrückung bei einer Regelung in der zweiten Regelstufe solange aktiviert bleibt, bis ein ermittelter momentaner Speichertemperatur-Istwert $T_{IST}$ den eingestellten Speichertemperatur-Mindestwert $T_{MIN}$ erreicht oder unterschreitet.

Hierbei ist das Ausschalten der Nachladeunterdrückung nicht an einen Abweichungsparameter $\Delta T$, sondern an den eingestellten Speichertemperatur-Mindestwert $T_{MIN}$, unabhängig von dem eingestellten Speichertemperatur-Sollwert $T_{SOLL}$, gekoppelt. Da die Funktion der Nachladeunterdrückung in dieser zweiten Regelstufe allerdings nicht an der eingestellten Solltemperatur des Wärmespeichers 30 orientiert ist, kann der subjektive oder objektive Warmwasserkomfort gegebenenfalls eingeschränkt sein, weshalb diese zweite Regelstufe erst bei konkretem Solarertrag aktiviert wird, also wenn dem Wärmespeicher 30 Wärme durch den Solarkollektor 20 zugeführt wird. Die erfindungsgemäße Funktion einer Nachladeunterdrückung zur Unterdrückung der Nachladung durch den Brenner 10 ist zu unterscheiden von einer Unterdrückung der Nachladung des Brenners 10 durch Umschalten auf einen anderen Sollwert der Speichertemperatur durch erneutes Einstellen eines Speichertemperatur-Sollwerts $T_{SOLL}$, gegebenenfalls automatisch oder prozessgesteuert.

Im Folgenden werden die Bedingungen für das Aktivieren bzw. Deaktivieren der ersten bzw. zweiten Regelstufe und die Einschaltbedingungen und Ausschaltbedingungen für die Nachladeunterdrückung beschrieben. Die Aktivierung bzw. Deaktivierung der ersten bzw. zweiten Regelstufe orientiert sich an der Differenztemperaturregelung des Solarkollektors 20, bzw. der Steuerung der Kollektorkreispumpe 22 durch die Solarkollektorsteuerungseinrichtung 41.

Die Bedingung für die Aktivierung bzw. Deaktivierung der ersten Regelstufe ist:

**WENN**     Differenztemperaturregler Solarpumpe = EIN

         ODER     Nachlaufzeit > Null

         **DANN**     erste Regelstufe = aktiv

**SONST**     erste Regelstufe = inaktiv

Die Bedingung zum Aktivieren oder Deaktivieren der zweiten Regelstufe ist:

**WENN**     Differenztemperaturregler Solarpumpe = EIN

         UND(Laufzeit Solarpumpe ununterbrochen $\geq$

         vorbestimmte Mindestlaufzeit)

         **DANN**     zweite Regelstufe = aktiv

**SONST**     zweite Regelstufe = inaktiv

Die Einschaltbedingung für die Nachladeunterdrückung ist:

**WENN**     (erste Regelstufe aktiv UND zweite Bedingung $\Delta T < \Delta T_2$ erfüllt)

         ODER     zweite Regelstufe aktiv

         **DANN**     Nachladeunterdrückung = EIN

Die Ausschaltbedingung für die Nachladeunterdrückung ist:

**WENN** (erste Regelstufe inaktiv

ODER dritte Bedingung $\Delta T > \Delta T_3$ erfüllt)

UNDzweite Regelstufe inaktiv

**DANN** Nachladeunterdrückung = AUS

UND Restnachlaufzeit zurücksetzen

Hierbei erfüllen die positiven Temperaturdifferenzparameterwerte $\Delta T_1$, $\Delta T_2$ und $\Delta T_3$ die Bedingung:

$$\Delta T_1 < \Delta T_2 < \Delta T_3.$$

Weiterhin soll der Status der Nachladeunterdrückung nicht geändert werden, wenn weder die oben genannte Ein- noch Ausschaltbedingung erfüllt ist. Somit wird eine aktivierte Nachladeunterdrückung nicht deaktiviert und eine deaktivierte Nachladeunterdrückung nicht aktiviert, solange weder die Ein- noch Ausschaltbedingungen erfüllt sind. Wird bei deaktivierter Nachladeunterdrückung festgestellt, dass die Einschaltbedingung der Nachladeunterdrückung erfüllt ist, dann wird die Nachladeunterdrückung aktiviert. Wird bei aktivierter Nachladeunterdrückung festgestellt, dass die Ausschaltbedingung für die Nachladeunterdrückung erfüllt ist, wird die Nachladeunterdrückung wieder deaktiviert.

In diesem Ausführungsbeispiel des Verfahrens zum Regeln der Wärmeerzeugungseinrichtung werden die oben beschriebenen zwei Regelstufen (erste Regelstufe und zweite Regelstufe) verwendet. Die vorliegende Erfindung ist jedoch nicht auf eine Verwendung von zwei Regelstufen begrenzt, vielmehr ist es möglich, weitere Ausführungsbeispiele der vorliegenden Erfindung bereitzustellen, wenn nur die erste Regelstufe oder nur die zweite Regelstufe in einem Verfahren zum Regeln einer Wärmeerzeugungseinrichtung genutzt wird, oder gegebenenfalls eine oder mehrere weitere Regelstufen.

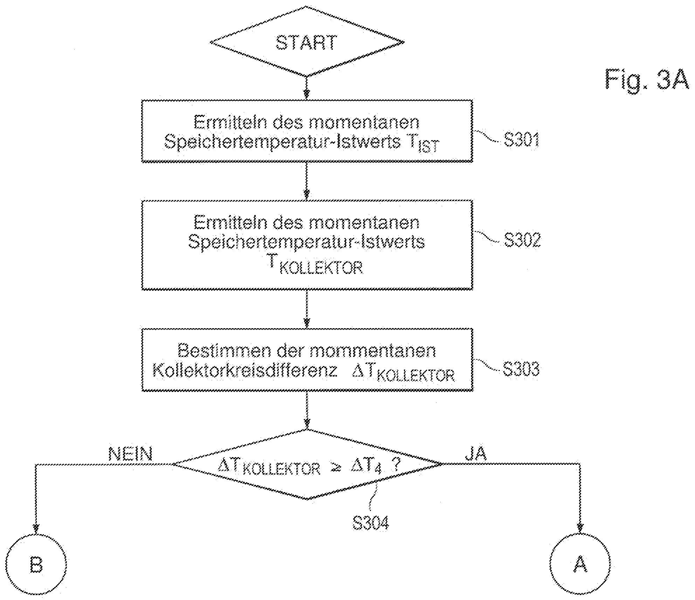

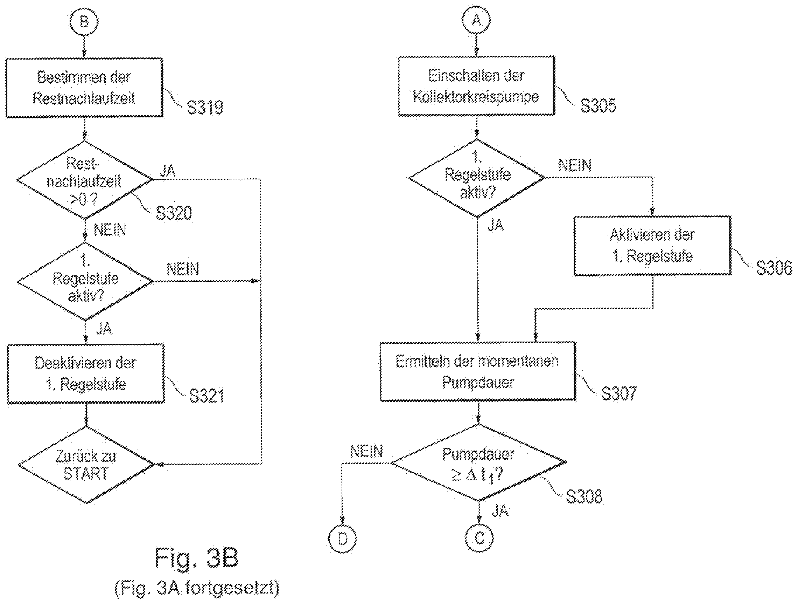

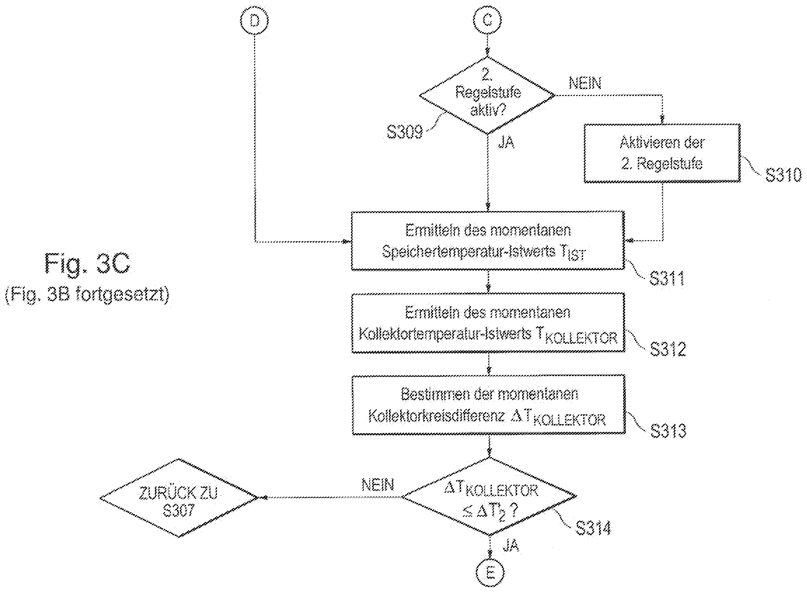

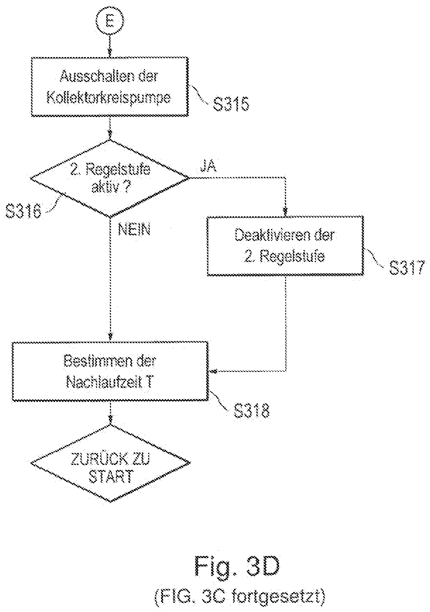

Fig. 3A bis Fig. 3D zeigen ein Ablaufdiagramm eines Verfahrens zum Regeln des Solarkollektors 20 nach dem ersten Ausführungsbeispiel des Verfahrens zum Regeln der Wärmeerzeugungseinrichtung nach der vorliegenden Erfindung. Das in Fig. 3A bis Fig. 3D dargestellte Regelungs-verfahren zum Regeln des Solarkollektors 20 umfasst die Schritte S301 Ermitteln des momentanen Speichertemperatur-Istwerts $T_{IST}$, S302 Ermitteln des momentanen Kollektortemperatur-Istwerts $T_{KOLLEKTOR}$, S303 Bestimmen der momentanen Kollektorkreisdifferenz $\Delta T_{KOLLEKTOR}$, S304 Prüfen, ob die bestimmte momentane Kollektorkreisdifferenz $\Delta T_{KOLLEKTOR}$ eine Kollektorkreispumpen-Einschaltbedingung erfüllt, S305 Einschalten der Kollektorkreispumpe, S306 Aktivieren der ersten Regelstufe, S307 Ermitteln der Pumpdauer, S308 Prüfen, ob die Pumpdauer eine vorbestimmte Mindestlaufzeit erreicht oder überschreitet, S309 Prüfen, ob die zweite Regelstufe aktiviert ist, S310 Aktivieren der zweiten Regelstufe, S311 Ermitteln des momentanen Speichertemperatur-Istwerts $T_{IST}$, S312 Ermitteln des momentanen Kollektortemperatur-Istwerts $T_{KOLLEKTOR}$, S313 Bestimmen der momentanen Kollektorkreisdifferenz $\Delta T_{KOLLEKTOR}$, S314 Prüfen, ob die bestimmte momentane Kollektorkreisdifferenz $\Delta T_{KOLLEKTOR}$ eine Kollektorkreispumpen-Ausschaltbedingung erfüllt, S315 Ausschalten der Kollektorkreispumpe, S316 Prüfen, ob die zweite Regelstufe aktiviert ist, S317 Deaktivieren der zweiten Regelstufe, S318 Bestimmen der Nachlaufzeit $\tau$, S319 Bestimmen der Restnachlaufzeit, S320 Prüfen, ob die Restnachlaufzeit den Wert Null erreicht hat, und S321 Deaktivieren der ersten Regelstufe.

Im Schritt S301 wird analog zum Schritt S202 in Fig. 2A der momentane Speichertemperatur-Istwert $T_{IST}$ ermittelt. Hierbei kann der Speichertemperatur-Istwert $T_{IST}$ analog zu Schritt S202 entweder kontinuierlich oder periodisch ausgeführt werden, um den Speichertemperatur-Istwert $T_{IST}$ als Funktion der Zeit t oder zumindest als Stufenfunktion der Zeit t zu ermitteln. Hierbei ist die vorliegende Erfindung jedoch nicht darauf beschränkt, dass der ermittelte momentane Speichertemperatur-Istwert $T_{IST}$ im Schritt S301 einem zum gleichen Zeitpunkt nach Schritt S202 ermittelten momentanen Speichertemperatur-Istwert $T_{IST}$ entspricht, wenn für die Regelung des Solarkollektors 20 und die Regelung des Brenners 10 jeweils Speichertemperaturen in unterschiedlichen Teilen des Wärmespeichers ermittelt werden.

Im Schritt S302 wird die momentane Kollektortemperatur, also der momentane Kollektortemperatur-Istwert $T_{KOLLEKTOR}$ ermittelt, der von einer Temperatur des thermischen Speichermediums 24 in zumindest einem Teil des Kollektorspeichers 21 des Solarkollektors 20 abhängt.

Durch Vergleich des ermittelten momentanen Speichertemperatur-Istwerts $T_{IST}$ und des momentanen Kollektortemperatur-Istwerts $T_{KOLLEKTOR}$ wird eine momentane Kollektorkreisdifferenz

$$\Delta T_{KOLLEKTOR} = T_{KOLLEKTOR} - T_{IST}$$

bestimmt.

Hierbei wird die Kollektorkreisdifferenz $\Delta T_{KOLLEKTOR}$ durch die Differenz des ermittelten momentanen Kollektortemperatur-Istwerts $T_{KOLLEKTOR}$ und des ermittelten momentanen Speichertemperatur-Istwerts $T_{IST}$ ermittelt. Die vorliegende Erfindung ist jedoch nicht auf eine Bestimmung durch Differenzbildung beschränkt und der Parameter $\Delta T_{KOLLEKTOR}$ kann auch in einer nicht-linearen Abhängigkeit von dem ermittelten momentanen Kollektortemperatur-Istwert $T_{KOLLEKTOR}$ und dem ermittelten momentanen Speichertemperatur-Istwert $T_{IST}$ bestimmt werden.

Im nächsten Schritt S304 wird geprüft, ob die bestimmte momentane Kollektorkreisdifferenz $\Delta T_{KOLLEKTOR}$ die Kollektorkreispumpen-Einschaltbedingung erfüllt. Hierfür wird geprüft, ob die bestimmte momentane Kollektorkreisdifferenz $\Delta T_{KOLLEKTOR}$ eine Kollektorkreispumpen-Einschalttemperaturdifferenz $\Delta T_4$ erreicht oder überschritten hat.

Wird in Schritt S304 festgestellt, dass die bestimmte momentane Kollektorkreisdifferenz $\Delta T_{KOLLEKTOR}$ die Kollektorkreispumpen-Einschaltbedingung erfüllt, wird im nächsten Schritt S305 die Kollektorkreispumpe eingeschaltet, um das thermische Speichermedium 24 aus dem Kollektorspeicher 21 durch Pumpen der Kollektorkreispumpe 22 über den Wärmetauscher 50 zu führen, um dem Wärmespeicher 30 Wärme zuzuführen.

Sofern die erste Regelstufe noch nicht aktiv bzw. aktiviert ist, wird im nächsten Schritt S306 Aktivieren der ersten Regelstufe, nach Einschalten der Kollektorkreispumpe S305 bzw. mit dem Einschalten der Kollektor-kreispumpe 22 die erste Regelstufe aktiviert.

Weiterhin wird nach dem Einschalten der Kollektorkreispumpe 22 in Schritt S305 eine Pumpdauer in Schritt S307 ermittelt, die eine Pumpdauer der Kollektorkreispumpe 22 seit Einschalten der Kollektorkreispumpe 22 in Schritt S305 angibt. Diese Pumpdauer entspricht entweder einer Wärmezufuhrdauer oder eine Wärmezufuhrdauer durch den Solarkollektor 20 wird anhand der Pumpdauer bestimmt. Gegebenenfalls kann die Wärmezufuhrdauer von einer Dauer einer Zufuhr von Wärme durch den Solarkollektor 20 abweichen, wenn die Wärmezufuhrdauer der Pumpdauer der Kollektorkreispumpe 22 entspricht, da gegebenenfalls bei Einschalten der Kollektorkreispumpe 22 zunächst dem Wärmespeicher 30 Wärme entzogen wird, da zuerst das im Kollektorvorlauf befindliche Wasser in den Wärme-speicher 30 gepumpt wird, bevor das erwärmte Wasser aus dem Kollektor-speicher 21 in den Wärmespeicher 30 gelangt, um dem Wärmespeicher 30 Wärme zuzuführen.

Im nächsten Schritt S308 wird überprüft, ob die in Schritt S307 ermittelte momentane Pumpdauer eine eingestellte Mindestlaufzeit $\Delta t_1$ erreicht oder übersteigt. Wird hierbei festgestellt, dass die ermittelte momentane Pumpdauer die Mindestlaufzeit erreicht oder überschritten hat, wird in Schritt S309 überprüft, ob die zweite Regelstufe aktiviert ist. Wird hierbei festgestellt, dass die zweite Regelstufe nicht aktiv bzw. nicht aktiviert ist, wird die zweite Regelstufe in Schritt S310 aktiviert, da die ermittelte momentane Pumpdauer bereits die eingestellte Mindestlaufzeit erreicht oder überschritten hat. Wird in Schritt S309 festgestellt, dass die zweite Stufe bereits aktiv oder aktiviert ist, folgt direkt Schritt S311 Ermitteln des momentanen Speichertemperatur-Istwerts $T_{IST}$. Weiterhin folgt auch nach einem gegebenenfalls durchgeführten Schritt S310 Aktivieren der zweiten Regelstufe der nächste Schritt S311 Ermitteln des momentanen Speichertemperatur-Istwerts $T_{IST}$.

Wird jedoch in Schritt S308 festgestellt, dass die ermittelte momentane Pumpdauer (S307) die Mindestlaufzeit noch nicht erreicht hat, wird direkt im Anschluss in Schritt S311 erneut der momentane Speichertemperatur-Istwert $T_{IST}$ ermittelt. Hierbei wird Schritt S311 analog zu Schritt S301 ausgeführt, jedoch bei eingeschalteter Kollektorkreispumpe 22.

Analog zu Schritt S302 wird nach Schritt S311 im Schritt S312 der momentane Kollektortemperatur-Istwert $T_{KOLLEKTOR}$ ermittelt und danach in Schritt S313 analog zu Schritt S303 die momentane Kollektorkreisdifferenz $\Delta T_{KOLLEKTOR}$ bestimmt. Auch hier werden die Schritte S312 und S313 im Gegensatz zu den Schritten S302 und S303 bei eingeschalteter Kollektor-kreispumpe 22 ausgeführt. Die in Schritt S313 bestimmte momentane Kollektorkreisdifferenz $\Delta T_{KOLLEKTOR}$ wird in Schritt S314 überprüft, in dem geprüft wird, ob die bestimmte momentane Kollektorkreisdifferenz $\Delta T_{KOLLEKTOR}$ bei eingeschalteter Kollektorkreispumpe die Kollektorkreispumpen-Ausschaltbedingung erfüllt ($\Delta T_{KOLLEKTOR} \leq \Delta T_2$'?).

Wird in Schritt S314 festgestellt, dass die bestimmte momentane Kollektorkreisdifferenz $\Delta T_{KOLLEKTOR}$ die Kollektorkreispumpen-Ausschaltbedingung noch nicht erfüllt, bleibt die Kollektorkreispumpe 22 eingeschaltet und es wird erneut (oder gegebenenfalls kontinuierlich) in Schritt S307 eine momentane Pumpdauer seit Einschalten der Kollektorkreispumpe 22 in Schritt S305 ermittelt, wobei die zweite Regelstufe nach den Schritten S308, S309 und S310 aktiviert wird, sobald die bestimmte Pumpdauer die Mindestlaufzeit erreicht oder übersteigt, oder bis in einem Schritt S314 festgestellt wird, dass die bestimmte momentane Kollektorkreisdifferenz $\Delta T_{KOLLEKTOR}$ die Kollektorkreispumpen-Ausschaltbedingung erfüllt.

Sobald die bestimmte momentane Kollektorkreisdifferenz $\Delta T_{KOLLEKTOR}$ die Kollektorkreispumpen-Ausschaltbedingung erfüllt, wird die Kollektor-kreispumpe 22 in Schritt S305 ausgeschaltet, um eine Wärmezufuhr von dem Kollektorspeicher 21 zu dem Wärmespeicher 30 zu beenden, oder zumindest um das Pumpen von Wasser von dem Kollektorspeicher 21 zu dem Wärmespeicher 30 durch die Kollektorkreispumpe 22 zu beenden.

Sofort nach oder bei Ausschalten der Kollektorkreispumpe 22 in Schritt S315 wird in einem nächsten Schritt S316 überprüft, ob die zweite Regelstufe aktiv ist, und wenn festgestellt wird, dass die zweite Regelstufe aktiv ist, wird diese aufgrund des Ausschaltens der Kollektorkreispumpe 22 in Schritt S317 deaktiviert. Weiterhin wird nach oder bei Ausschalten der Kollektorkreispumpe 22 S315 eine Nachlaufzeit τ in Schritt S318 bestimmt. Die Nachlaufzeit τ wird bestimmt anhand der letzten in Schritt S307 ermittelten momentanen Pumpdauer, die dem Zeitintervall zwischen Einschalten der Kollektorkreispumpe 22 in Schritt S305 und dem Ausschalten der Kollektorkreispumpe 22 in Schritt S315 entspricht.

Hierbei wird nach diesem Ausführungsbeispiel des Regelungsverfahrens des Solarkollektors 20 eine Nachlaufzeit τ aus der bestimmten Pumpdauer zwischen Einschalten und Ausschalten der Kollektorkreispumpe durch Multiplikation gebildet. Beispielhaft wird hier ein Multiplikationsfaktor k = 5 angenommen, so dass sich die Nachlaufzeit τ als 5-fache Dauer der bestimmten Pumpdauer zwischen Ein- und Ausschalten der Kollektor-kreispumpe bestimmt. Vergehen also zum Beispiel zwischen Einschalten und Ausschalten der Kollektorkreispumpe 22 30 Minuten, wird die Nachlaufzeit τ gleich 2,5 Stunden bestimmt.

Zum Beginn eines neuen Zyklus wird nach dem Bestimmen der Nachlaufzeit τ in Schritt S308 erneut in Schritt S301 der momentane Speichertemperatur-Istwert $T_{IST}$ bei ausgeschalteter Kollektorkreispumpe 22 ermittelt.

Wird nun nach weiterer Ausführung der Schritte S302 und S303 in dem Schritt S304 im Gegensatz zu dem oben beschriebenen festgestellt, dass die bestimmte momentane Kollektorkreisdifferenz $\Delta T_{KOLLEKTOR}$ die Kollektorkreispumpen-Einschaltbedingung noch nicht erfüllt, wird in einem nächsten Schritt S319 eine Restnachlaufzeit bestimmt, wobei die Restnachlaufzeit das Zeitintervall angibt, das seit dem Zeitpunkt des Ausschaltens der Kollektorkreispumpe in Schritt S305 vergangen ist. Sind beispielsweise bei der Ausführung des Schritts S319 1,5 Stunden seit Abschalten der Kollektorkreispumpe 22 vergangen, wobei in Schritt S318 eine Nachlaufzeit τ = 2,5 Stunden bestimmt wurde, wird in Schritt S319 eine Restnachlaufzeit von 1 Stunde bestimmt.

Im darauffolgenden Schritt S320 wird überprüft, ob die in Schritt S319 bestimmte Restnachlaufzeit größer Null ist, also ob seit dem letzten Abschalten der Kollektorkreispumpe 22 ein Zeitintervall kleiner der zuletzt bestimmten Nachlaufzeit τ vergangen ist.

Wird in Schritt S320 festgestellt, dass die Nachlaufzeit noch nicht abgelaufen ist, also wenn festgestellt wird, dass die Restnachlaufzeit größer Null ist, wird erneut mit Schritt S301 Ermitteln des momentanen Speichertemperatur-Istwerts $T_{IST}$ bei ausgeschalteter Kollektorkreispumpe 22 fortgefahren. Wird jedoch in Schritt S320 festgestellt, dass die Nachlaufzeit abgelaufen ist, also wenn seit dem letzten Abschalten der Kollektorkreispumpe 22 ein Zeitintervall größer der in Schritt S318 letzten bestimmten Nachlaufzeit τ abgelaufen ist, wird überprüft, ob die erste Regelstufe aktiv ist, um in diesem Fall in Schritt S321 deaktiviert zu werden, da die Restnachlaufzeit abgelaufen ist. Im nächsten Zyklus wird auch hier nach dem Schritt S321 erneut in Schritt S301 der momentane Speichertemperatur-Istwert $T_{IST}$ ermittelt.

Hierbei ergeben sich die Aktivierungen bzw. Deaktivierungen der ersten bzw. zweiten Regelstufe innerhalb des Regelungsverfahrens zum Regeln des Solarkollektors 20 durch die Solarkollektorsteuerungseinrichtung 41.

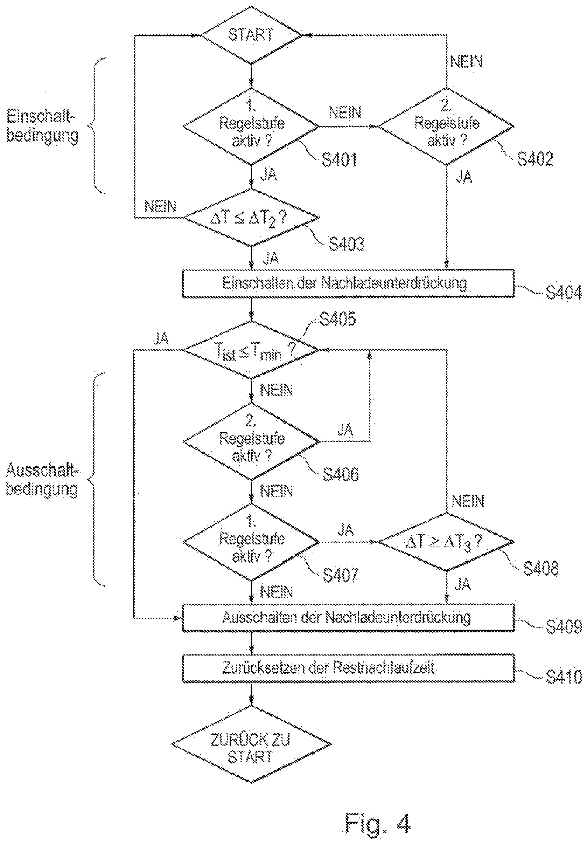

Wie vorstehend beschrieben, wird erfindungsgemäß eine Nachladeunterdrückung ein- bzw. ausgeschaltet anhand der Überprüfung von Einschalt- bzw. Ausschaltbedingungen zur Nachladeunterdrückung, in Abhängigkeit einer Aktivierung bzw. Deaktivierung der ersten bzw. zweiten Regelstufe. Ein schematisches Ablaufdiagramm für das Ein- und Aus-schalten einer Nachladeunterdrückung nach dem ersten Ausführungsbeispiel des Verfahrens zum Regeln einer Wärmeerzeugungseinrichtung nach der vorliegenden Erfindung ist in Fig. 4 dargestellt. Somit wird in Fig. 4 graphisch illustriert, wie die Ein- und Ausschaltbedingungen der Nachladeunterdrückung überprüft werden. Hierbei ist jedoch festzustellen, dass es sich in Fig. 4 nur um eine aus vielen möglichen Reihenfolgen handelt, in der die verschiedenen Kriterien der Einschalt- bzw. Ausschaltbedingungen der Nachladeunterdrückung ausgeführt werden können.

Nach Fig. 4 wird zuerst in einem Schritt S401 überprüft, ob die erste Regelstufe aktiviert bzw. aktiv ist.

Wird in Schritt S401 festgestellt, dass die erste Regelstufe nicht aktiv bzw. deaktiviert ist, wird in Schritt S402 überprüft, ob die zweite Regelstufe aktiv bzw. aktiviert ist.

Wird in Schritt S402 festgestellt, dass die zweite Regelstufe aktiv bzw. aktiviert ist, ist die Einschaltbedingung zur Nachladeunterdrückung erfüllt, da die zweite Stufe aktiv ist und somit wird in Schritt S404 die Nachladeunterdrückung eingeschaltet.

Wird jedoch in Schritt S402 festgestellt, dass die zweite Regelstufe nicht aktiv bzw. deaktiviert ist, ist die Einschaltbedingung der Nachladeunterdrückung nicht erfüllt, so dass die Überprüfung der Einschaltbedingung von Neuem beginnt.

Wird in Schritt S401 festgestellt, dass die erste Regelstufe aktiv bzw. aktiviert ist, wird in einem weiteren Schritt S403 überprüft, ob der bestimmte momentane Abweichungsparameter ΔT die zweite Bedingung $(\Delta T \leq \Delta T_2?)$ erfüllt.

Wird in Schritt S403 festgestellt, dass der bestimmte momentane Abweichungsparameter ΔT die zweite Bedingung erfüllt, ist die Einschaltbedingung der Nachladeunterdrückung ebenfalls erfüllt, so dass auch in diesem Falle in Schritt S404 eine Nachladeunterdrückung eingeschaltet wird.

Wird jedoch in Schritt S403 festgestellt, dass der bestimmte momentane Abweichungsparameter ΔT die zweite Bedingung nicht erfüllt, ist die Einschaltbedingung für die Nachladeunterdrückung nicht erfüllt und die Überprüfung der Einschaltbedingung der Nachladeunterdrückung beginnt erneut.

Nach Einschalten der Nachladeunterdrückung in Schritt S404, wenn die Einschaltbedingung der Nachladeunterdrückung erfüllt ist, wird in einem nächsten Schritt S405 überprüft, ob der bestimmte momentane Speichertemperatur-Istwert $T_{IST}$ den eingestellten Speichertemperatur-Mindestwert $T_{MIN}$ erreicht oder bereits unterschritten hat. Wird hierbei festgestellt, dass der bestimmte momentane Speichertemperatur-Istwert $T_{IST}$ den eingestellten Speichertemperatur-Mindestwert $T_{MIN}$ erreicht oder unterschritten hat, wird sofort im nächsten Schritt S409 die Nachladeunterdrückung wieder ausgeschaltet, um Komforteinbußen für den Nutzer zu vermeiden.

Wird jedoch in Schritt S405 festgestellt, dass der bestimmte momentane Speichertemperatur-Istwert $T_{IST}$ den eingestellten Speichertemperatur-Mindestwert $T_{MIN}$ noch nicht erreicht und auch noch nicht unterschritten hat, beginnt in einem Schritt S406 die Überprüfung der Ausschaltbedingung der Nachladeunterdrückung mit dem Prüfen, ob die zweite Regelstufe aktiv oder aktiviert ist. Wird hierbei in Schritt S406 festgestellt, dass die zweite Regelstufe aktiv oder aktiviert ist, wird festgestellt, dass die Ausschaltbedingung der Nachladeunterdrückung nicht erfüllt ist, so dass erneut mit Schritt S405 fortgefahren wird.

Wird jedoch in Schritt S406 festgestellt, dass die zweite Regelstufe nicht aktiv, also inaktiv oder deaktiviert ist, wird in Schritt S407 geprüft, ob die erste Regelstufe aktiv oder aktiviert ist. Wird hierbei in Schritt S407 festgestellt, dass die erste Regelstufe nicht aktiv, also inaktiv oder deaktiviert ist, bedeutet dies, da weder die erste noch die zweite Regelstufe aktiv sind, dass die Ausschaltbedingung der Nachladeunterdrückung erfüllt ist, woraufhin in Schritt S409 die Nachladeunterdrückung ausgeschaltet wird.

Wird jedoch in Schritt S407 festgestellt, dass die erste Regelstufe aktiv oder aktiviert ist, wird in Schritt S408 überprüft, ob der bestimmte momentane Abweichungsparameter $\Delta T$ die dritte Bedingung ($\Delta T \geq \Delta T_3$?) erfüllt.

Wird hierbei in Schritt S408 festgestellt, dass der bestimmte momentane Abweichungsparameter $\Delta T$ die dritte Bedingung nicht erfüllt, wird somit festgestellt, dass die Ausschaltbedingung der Nachladeunterdrückung nicht erfüllt ist und es wird erneut mit Schritt S405 fortgefahren.

Wird jedoch in Schritt S408 festgestellt, dass der bestimmte momentane Abweichungsparameter $\Delta T$ die dritte Bedingung erfüllt, wird festgestellt, dass die Ausschaltbedingung der Nachladeunterdrückung erfüllt ist. Somit wird auch in diesem Falle mit Schritt S409 des Ausschaltens der Nachladeunterdrückung fortgefahren. Nach Ausschalten der Nachladeunterdrückung in Schritt S409 wird im nächsten Schritt S410 Zurücksetzen der Restnachlaufzeit die Restnachlaufzeit, die im letzten Bestimmen der Restnachlaufzeit in Schritt S319 bestimmt wurde, zurückgesetzt.

Zusammenfassend wird in dem Verfahren zum Regeln einer Wärmeerzeugungseinrichtung nach dem ersten Ausführungsbeispiel der vorliegenden Erfindung eine erste Regelstufe der Nachladeunterdrückung aktiviert, sobald die Kollektorkreispumpe anhand einer Differenztemperaturregelung einschaltet. Nach Ausschalten der Kollektorkreispumpe 22 anhand der Differenztemperaturregelung bleibt die Nachladeunterdrückung abhängig von der Pumpenlaufzeit noch eine Zeit lang bestehen, dem sogenannten Nachlauf der ersten Regelstufe. Dies führt bei einer bivalenten Wärmeerzeugungseinrichtung mit einem Solarkollektor 20 dazu, dass z. B. bei leichter Bewölkung, also unbeständiger Verfügbarkeit von Sonnenenergie, die Nachladeunterdrückung kontinuierlich bestehen bleibt, wenn die Zeitintervalle, in denen die Pumpe ausgeschaltet ist, unterhalb einer bestimmten Nachlaufzeit bleiben und die Pumpe erneut eingeschaltet wird, bevor die Nachlaufzeit bzw. eine Restnachlaufzeit abgelaufen ist.

Beispielhaft entspricht die Dauer eines bestimmten Nachlaufs (Pumpennachlaufs) der 5-fachen tatsächlichen Pumpenlaufzeit. Ist die Kollektorkreispumpe 22 eine halbe Stunde in Betrieb, beträgt die Dauer der Nachladeunterdrückung in der ersten Regelstufe insgesamt 3 Stunden, zuerst eine halbe Stunde während der tatsächlichen Pumpenlaufzeit und danach durch den bestimmten Nachlauf von 2,5 Stunden.

Hierbei kann nach einem weiteren Ausführungsbeispiel des Verfahrens zum Regeln der Wärmeerzeugungseinrichtung nach der vorliegenden Erfindung die Nachlaufzeit bei Bestimmen der Nachlaufzeit kumuliert werden. Das Regelungsverfahren zum Regeln einer Wärmeerzeugungseinrichtung entspricht dem ersten Ausführungsbeispiel wie oben beschrieben mit einer zusätzlichen Kumulationsfunktion beim Bestimmen der Nachlaufzeit. In einem solchen Ausführungsbeispiel wird beim Bestimmen der Nachlaufzeit kumuliert, wenn die Kollektorkreispumpe 22 bereits vor Ablauf des zuvor bestimmten Nachlaufs bzw. der zuvor bestimmten Nachlaufdauer, abgelaufen ist, so dass noch eine Restnachlaufzeit vorhanden ist. Wird nun nach erneutem Ausschalten der Kollektor-kreispumpe 22 erneut eine Nachlaufzeit basierend auf der letzten Pumpendauer der Kollektorkreispumpe 22 bestimmt, wird zu dieser bestimmten Nachlaufzeit zusätzlich die zuvor verbliebene Restnachlaufzeit bestimmt.

Wird also z.B. nach einem ersten Ausschalten der Kollektorkreis-pumpe nach einer Pumpendauer von einer halben Stunde eine Nachlaufzeit von 2,5 Stunden (k = 5) bestimmt, wobei die Kollektorkreispumpe 22 bereits eine Stunde nach Ausschalten der Kollektorkreispumpe 22 wieder einschaltet, so dass eine Restnachlaufzeit von 1,5 Stunden verbleibt, wird diese Restnachlaufzeit von 1,5 Stunden später kumuliert. Schaltet die Kollektorkreispumpe 22 zum Beispiel nach einer erneuten Pumpendauer von 30 Minuten ab, so dass nach dem ersten Ausführungsbeispiel 2,5 Stunden Nachlaufzeit bestimmt würden, werden die 1,5 Stunden Restnachlaufzeit in diesem Ausführungsbeispiel addiert, so dass durch Kumulation eine Nachlaufzeit von 4 Stunden bestimmt wird.

Somit kann auch an einem unbeständigen Tag, an dem nur unbeständig Sonnenenergie verfügbar ist, die Nachladung gegebenenfalls den ganzen Tag verzögert, bzw. vermieden werden, wenn die insgesamt kumulierte Laufzeit der Kollektorkreispumpe 22 und damit der insgesamt erreichte solare Ertrag ausreichend hoch ist.

In einem weiteren Ausführungsbeispiel der vorliegenden Erfindung kann die Kumulation des vorhergehenden Ausführungsbeispiels dadurch begrenzt werden, dass eine maximale Nachlaufzeit bzw. ein Grenzwert für eine Nachlaufzeit bestimmt wird, z. B. 24 Stunden.

Im ersten Ausführungsbeispiel des Verfahrens zum Regeln einer Wärmeerzeugungseinrichtung nach der vorliegenden Erfindung wird zusätzlich eine zweite Regelstufe verwendet. Sobald die Laufzeit der Kollektorkreispumpe 22 ununterbrochen andauert, so dass sie eine eingestellte Mindestdauer erreicht oder überschreitet, z. B. 60 Minuten, wird die zweite Regelstufe der Nachladeunterdrückung aktiviert. Die zweite Regelstufe bleibt aktiviert, solange die Kollektorkreispumpe 22 in Betrieb bleibt. Optional kann hierbei in einem weiteren Ausführungsbeispiel zusätzlich eine Nachlaufzeit für die erste Regelstufe auf den Maximalwert gesetzt werden, wenn die zweite Regelstufe aktiviert wird.

Somit kann in einem Ausführungsbeispiel mit einem maximalen Grenzwert für eine kumulierte Nachlaufzeit bei Aktivierung der zweiten Regelstufe die bestimmte Nachlaufzeit auf den Maximalwert gesetzt werden, so dass nach Abschalten der Pumpe und Deaktivieren der zweiten Regelstufe die Nachladeunterdrückung noch mindestens einer Nachlaufzeit entsprechend dem eingestellten Maximalgrenzwert nach dem letzten Abschalten der Kollektorkreispumpe 22 in der ersten Regelstufe aktiviert bleibt.

In einem weiteren Ausführungsbeispiel der vorliegenden Erfindung umfasst das Verfahren zum Regeln einer Wärmeerzeugungseinrichtung zusätzlich den Schritt des Übermittelns eines Boolschen Signals von der Solarkollektorsteuerungseinrichtung 41 zu der Brennersteuerungseinrichtung 42, so dass im Verfahren zum Regeln des Solarkollektors 20 durch die Solarkollektorsteuerungseinrichtung 41 festgestellt wird, ob eine Nachladeunterdrückung ein- bzw. ausgeschaltet wird und durch die Signalübertragung von der Solarkollektorsteuerungseinrichtung 41 zu der Brennersteuerungseinrichtung 42 übermittelt wird, ob die Nachladeunterdrückung eingeschaltet oder ausgeschaltet ist (Boolsches Signal: EIN oder AUS). Dafür müssen zunächst in der Solarkollektorsteuerung seinrichtung 41 modulintern die Signale gebildet werden, die angeben, ob die erste und/oder zweite Regelstufe aktiv bzw. inaktiv ist. Danach kann in der Solarkollektorsteuerungseinrichtung 41 aus den beiden Signalen bezüglich der ersten Regelstufe und der zweiten Regelstufe und ggf. anhand der Überprüfung der weiteren Kriterien der Einschalt- und Ausschaltbedingung der Nachladeunterdrückung ein einziges Boolsches Signal zur Nachladeunterdrückung (EIN oder AUS) generiert werden.

Die oben beschriebene Regelungsmethode für den Solarkollektor 20 kann das Boolsche Signal zur Nachladeunterdrückung (EIN/AUS) derart generieren, dass es über einen Datenbus von der Solarkollektorsteuerungseinrichtung 41 zu der Brennersteuerungseinrichtung 42 übertragen werden kann.

Hierbei wird nach einer weiteren Ausführungsform der vorliegenden Erfindung in der Regelungsmethode des zweiten Wärmeerzeugers, z.B. des Brenners 10, eine einmal begonnene Speichernachladung nicht durch ein eingehendes Signal zum Einschalten einer Nachladeunterdrückung oder zum Informieren über den aktiven Zustand einer Nachladeunterdrückung unterbrochen, um zusätzlich ein unnötiges Brennertakten zu vermeiden (z. B. Ausschalten des Brenners kurz nach dem Einschalten).

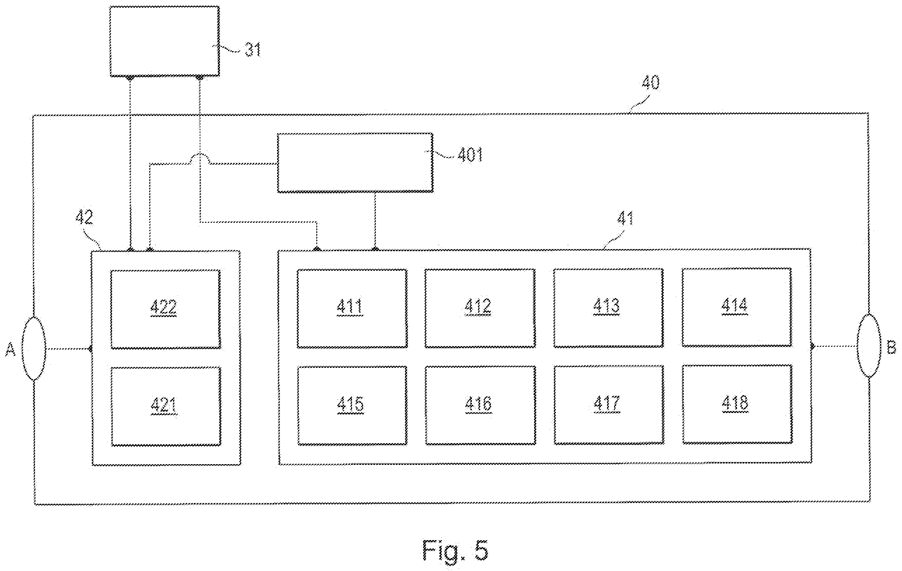

Im Folgenden wird eine Ausführungsform einer Vorrichtung zum Regeln einer Wärmeerzeugungseinrichtung nach der vorliegenden Erfindung beschrieben, die dazu geeignet ist, das Verfahren zum Regeln einer Wärmeerzeugungseinrichtung nach zumindest einem der oben beschriebenen Ausführungsbeispiele auszuführen. Die Vorrichtung zum Regeln der Wärmeerzeugungseinrichtung ist in dieser Ausführungsform der vorliegenden Erfindung in Fig. 5 schematisch dargestellt. Wie in Fig. 5 dargestellt sind viele Mittel der Vorrichtung zum Regeln einer Wärmeerzeugungseinrichtung in einer bevorzugten Ausführungsform Bestandteile der Brennersteuerungseinrichtung 42 oder der Kollektorsteuereinrichtung 41. Die vorliegende Erfindung ist jedoch nicht auf diese Ausführungsform beschränkt und weitere Kombinationen sind möglich. Die Wärmeerzeugersteuerungseinrichtung 40 in Fig. 5 umfasst zwei Schnittstellen A und B, um Regel- und/oder Steuersignale der Brennersteuerungseinrichtung 42 zu dem Brenner 10 zu übermitteln und/oder Signale von der Kollektorsteuereinrichtung 41 zu dem Solarkollektor 20, insbesondere der Kollektorkreispumpe 22, zu übermitteln.

In der bevorzugten Ausführungsform umfasst die Vorrichtung zum Regeln der Wärmeerzeugungseinrichtung zumindest ein Speichertemperatur-Istwert-Ermittelungsmittel 31 zum Ermitteln zumindest eines Speichertemperatur-Istwerts $T_{IST}$ in zumindest einem Teil des Wärmespeichers 30.

Weiterhin umfasst die Vorrichtung ein Betriebszustand-Feststellungs-mittel 411 zum Prüfen, ob der erste Wärmeerzeuger, z. B. der Solarkollektor 20, dazu geeignet ist, dem Wärmespeicher 30 Wärme zuzuführen, wobei das Betriebszustand-Feststellungsmittel anhand einer Differenztemperaturregelung feststellt, ob dem Wärmespeicher 30 durch den Solarkollektor 20 Wärme zugeführt werden kann. In einer alternativen Ausführungsform des Betriebszustand-Feststellungsmittels 411 wird der Solarkollektor 20 anhand der Differenztemperaturmethode geregelt, wobei das Betriebszustands-Feststellungsmittel 411 feststellt, ob der Solarkollektor 20 dazu geeignet ist, dem Wärmespeicher 30 Wärme zuzuführen, indem das Betriebszustand-Feststellungsmittel 411 feststellt, ob die Kollektorkreispumpe 22 eingeschaltet oder ausgeschaltet ist.

Weiterhin umfasst die Vorrichtung ein Speichertemperatur-Sollwert-Einstellmittel 401, zum Einstellen eines Sollwerts der Speichertemperatur, dem sogenannten Speichertemperatur-Sollwert $T_{SOLL}$.

Weiterhin umfasst die Vorrichtung ein erstes und ein zweites Abweichungsparameter-Bestimmungsmittel 412 und 422 zum Bestimmen des Abweichungsparameters $\Delta T$ zwischen dem eingestellten Speichertemperatur-Sollwert $T_{SOLL}$ und dem bestimmten momentanen Speichertemperatur-Istwert $T_{IST}$. Hierbei ist das erste Abweichungsparameter-Bestimmungsmittel 412 ein Bestandteil der Solarkollektorsteuerungseinrichtung 41 und das zweite Abweichungsparameter-Bestimmungsmittel 422 ein Teil der Brennersteuerungseinrichtung 42, so dass die Brennersteuerungseinrichtung 42 und die Solarkollektorsteuerungseinrichtung 41 unabhängig voneinander einen Abweichungsparameter $\Delta T$ für die Regelung des Solarkollektors 20 und für die Regelung des Brenners 10 ermitteln können. Die vorliegende Erfindung ist jedoch nicht auf derartige Ausführungsformen beschränkt und es ist ebenso möglich, dass die Vorrichtung nur ein Abweichungsparameter-Bestimmungsmittel umfasst, indem ein Abweichungsparameter $\Delta T$ sowohl für die Regelung des Solarkollektors 20 als auch für die Regelung des Brenners 10 bestimmt wird.

Weiterhin umfasst die Vorrichtung ein erstes und ein zweites Abweichungsparameter-Prüfmittel 413 und 421, wobei das erste Abweichungsparameter-Prüfmittel 413 ein Teil der Solarkollektorsteuerungseinrichtung 41 ist und das zweite Abweichungsparameter-Prüfmittel 421 ein Teil der Brennersteuerungseinrichtung 42 ist, wobei das erste und das zweite Abweichungsparameter-Prüfmittel dazu geeignet ist, zu prüfen, ob ein bestimmter Abweichungsparameter die erste, die zweite, die dritte oder eine andere Bedingung, gegebenenfalls eine eingestellte Bedingung, erfüllt. Auch hierbei ist die vorliegende Erfindung nicht darauf beschränkt, dass ein erstes und ein zweites Abweichungsparameter-Prüfmittel 413 und 421 bereitgestellt werden, sondern es sind ebenso Ausführungsformen möglich, in denen nur ein Abweichungsparameter-Prüfmittel vorhanden ist, das sowohl für die Regelung des Solarkollektors 20 und die Regelung des Brenners 10 verwendet werden kann.

Weiterhin umfasst die Vorrichtung ein Betriebsart-Umschaltmittel 414 zum Umschalten einer Betriebsart der Wärmeerzeugungseinrichtung, bzw. zum Ein- und Ausschalten einer Nachladeunterdrückung.

Weiterhin umfasst die Vorrichtung ein Wärmezufuhrdauer-Ermittelungsmittel 415 zum Ermitteln einer Wärmezufuhrdauer, bzw. einer Pumpendauer, die eine Dauer einer ununterbrochenen Wärmezufuhr durch den Solarkollektor 20 zu dem Wärmespeicher 30 angibt oder zumindest eine Dauer eines ununterbrochenen Betriebs der Kollektorkreis-pumpe 22.

Weiterhin umfasst die Vorrichtung ein Regelstufen-Aktivierungsmittel 416, das dazu geeignet ist, eine erste Regelstufe zu aktivieren bzw. zu deaktivieren und/oder eine zweite Regelstufe zu aktivieren bzw. zu deaktivieren.

Weiterhin umfasst die Vorrichtung ein Nachlaufzeit-Bestimmungs-mittel 417 zum Bestimmen einer Nachlaufzeit $\tau$ in Abhängigkeit der ermittelten Wärmezufuhrdauer, die von dem Wärmezufuhrdauer-Ermittelungsmittel 415 ermittelt wird.

Gegebenenfalls umfasst das Nachlaufzeit-Bestimmungsmittel 417 weiterhin Mittel zum Einstellen eines Maximalnachlaufzeit-Grenzwerts, wenn das Nachlaufzeit-Bestimmungsmittel eine Nachlaufzeit durch Kumulation (in Abhängigkeit von einer bestimmten Restnachlaufzeit) bestimmt und/oder Mittel zum Einstellen eines Faktors k, wenn die Nachlaufzeit in Abhängigkeit des Faktors k und einer bestimmten Wärmezufuhrdauer bestimmt wird.

Schließlich umfasst die Vorrichtung ein Restlaufzeit-Zurücksetzmittel 418, um eine Nachlaufzeit bzw. eine bestimmte Restlaufzeit nach Ausschalten der Kollektorkreispumpe 22 zurückzusetzen, sobald das Betriebsart-Umschaltmittel 414 eine Nachladeunterdrückung ausschaltet, oder ein Signal Nachladeunterdrückung = AUS übermittelt.

Die vorangehend beschriebenen Mittel der Vorrichtung in Fig. 4 sind dazu geeignet, das Verfahren zum Regeln einer Wärmeerzeugungseinrichtung nach zumindest einem der oben beschriebenen Ausführungsbeispiele auszuführen.

Die Vorrichtung in Fig. 4 ist hierbei Teil einer Wärmeerzeugungseinrichtung oder einer Steuereinrichtung 40 zum Steuern der Wärmeerzeugungseinrichtung, wobei die Mittel der Vorrichtung in Fig. 4 gegebenenfalls auf die Brennersteuerungseinrichtung 42 und die Solarkollektorsteuerungseinrichtung 41 verteilt sind.

Ferner umfasst die Vorrichtung zum Regeln einer Wärmeerzeugungseinrichtung nach der vorliegenden Erfindung in einer weiteren Ausführungsform weitere Mittel zum Einstellen zumindest eines der Parameter $\Delta T_1$, $\Delta T_2$, $\Delta T_3$, einer Mindestlaufzeit der Kollektorkreispumpe 22 für die Aktivierung einer zweiten Regelstufe, $\Delta T_4$, einen Speichertem-peratur-Mindestwert $T_{MIN}$ und/oder der Parameter aus der Brenner-Ausschaltbedingung, Brenner-Einschaltbedingung, Solarkollektor-Einschaltbedingung und/oder Solarkollektor-Ausschaltbedingung.

Mittels des erfindungsgemäßen Verfahrens und der erfindungsgemäßen Vorrichtung zum Regeln einer Wärmeerzeugungseinrichtung können ohne weitere zusätzliche Sensorik Wetterinformationen bzw. eine Prognose für Wetterinformationen genutzt werden, indem sich die Erfindung den Umstand zunutze macht, dass eine lange Pumpenlaufzeit einen sonnenreichen Tag suggeriert. Die daraus resultierende lange Zeit der Nachladeunterdrückung, z. B. durch Kumulation, macht sich den Umstand zunutze, dass auf einen sonnenreichen Tag mit einer relativ hohen Wahrscheinlichkeit ein weiterer sonnenreicher Tag mit erwartbarem Solarertrag folgen kann.

Aufgrund dieser Prognosen kann die Nachladung durch den zweiten Wärmeerzeuger, z. B. durch einen Brenner 10, verzögert oder unterbunden werden, um den solaren Ertrag zu maximieren, bzw. eine solare Deckungsrate zu optimieren. Für den Fall, dass diese einfache Prognose fehlschlagen sollte, sind die Einschalt- und Ausschaltbedingungen der Nachladeunterdrückung durch verschiedene Eskalationsstufen derart regelbar, dass ein Verhalten der Wärmeerzeugungseinrichtung, z. B. bezüglich des Bereitstellens eines Warmwasserkomforts, nicht eingeschränkt wird.

**Patentansprüche**

1. Verfahren zum Regeln einer Wärmeerzeugungseinrichtung mit einem ersten Wärmeerzeuger (20), einem zweiten Wärmeerzeuger (10) und einem Wärmespeicher (30) zum Speichern von Wärme, wobei der zweite Wärmeerzeuger (10) dazu geeignet ist, dem Wärmespeicher (30) Wärme zuzuführen, und wobei der erste Wärmeerzeuger (20) zumindest zwei Betriebszustände einnehmen kann und in einem ersten Betriebszustand der zumindest zwei Betriebszustände dem Wärmespeicher (30) Wärme zuführt und in einem zweiten Betriebszustand der zumindest zwei Betriebszustände dem Wärmespeicher (30) keine Wärme zuführt, wobei das Verfahren zum Regeln der Wärmeerzeugungseinrichtung die Schritte umfasst:

   - Ermitteln zumindest eines Speichertemperatur-Istwerts $T_{IST}$, der von einer Temperatur in zumindest einem Teil des Wärmespeichers (30) abhängt,
   - Feststellen, ob der erste Wärmeerzeuger (20) den ersten Betriebszustand einnimmt,
   - Zuführen von Wärme an den Wärmespeicher (30) durch den ersten Wärmeerzeuger (20), wenn festgestellt wird, dass der erste Wärmeerzeuger (20) den ersten Betriebszustand der zumindest zwei Betriebszustände einnimmt,
   - Einstellen eines Speichertemperatur-Sollwerts $T_{SOLL}$, der einen Sollwert der Speichertemperatur im Wärmespeicher (30) angibt,
   - Vergleichen des eingestellten Speichertemperatur-Sollwerts $T_{SOLL}$ mit dem ermittelten Speichertemperatur-Istwert $T_{IST}$ zum Bestimmen eines Abweichungsparameters zwischen Speichertemperatur-Sollwert $T_{SOLL}$ und Speichertemperatur-Istwert $T_{IST}$,
   - Feststellen anhand des bestimmten Abweichungsparameters, ob dem Wärmespeicher (30) Wärme durch den zweiten Wärmeerzeuger (10) zuzuführen ist, wobei in einer ersten Betriebsart der Wärmeerzeugungseinrichtung dem Wärmespeicher (30) Wärme durch den zweiten Wärmeerzeuger (10) zuzuführen ist, wenn der bestimmte Abweichungsparameter eine erste Bedingung erfüllt, **gekennzeichnet durch** den weiteren Schritt:
   - Umschalten einer Betriebsart der Wärmeerzeugungseinrichtung von der ersten Betriebsart in eine zweite Betriebsart in Abhängigkeit einer Zufuhr von Wärme durch den ersten Wärmeerzeuger (20) im ersten Betriebszustand,

   wobei in der zweiten Betriebsart der Wärmeerzeugungseinrichtung im Schritt des Feststellens, ob dem Wärmespeicher (30) Wärme durch den zweiten Wärmeerzeuger (10) zuzuführen ist, festgestellt wird, dass dem Wärmespeicher (30) keine Wärme durch den zweiten Wärmeerzeuger (10) zuzuführen ist.

2. Verfahren nach Anspruch 1, **gekennzeichnet durch** den Schritt des Umschaltens der Betriebsart der Wärmeerzeugungseinrichtung von der zweiten Betriebsart in die erste Betriebsart in Abhängigkeit einer Zufuhr von Wärme durch den ersten Wärmeerzeuger (20) im ersten Betriebszustand.

3. Verfahren nach Anspruch 1 oder **2, dadurch gekennzeichnet, dass** das Umschalten einer Betriebsart der Wärmeerzeugungseinrichtung in Abhängigkeit einer abgeschätzten zur Verfügung stehenden Wärmemenge für die Zufuhr von Wärme durch den ersten Wärmeerzeuger (20) im ersten Betriebszustand ausgeführt wird.

4. Verfahren nach zumindest einem der Ansprüche 1 bis 3, **gekennzeichnet durch** den Schritt

   - Ermitteln einer Wärmezufuhrdauer einer ununterbrochenen Wärmezufuhr durch den ersten Wärmeerzeuger (20) im ersten Betriebszustand, wobei die Wärmezufuhrdauer ein Zeitintervall angibt, in dem der erste Wärmeerzeuger (20) dem Wärmespeicher (30) im ersten Betriebszustand ununterbrochen Wärme zuführt bis eine Zufuhr von Wärme durch den ersten Wärmeerzeuger (20) beendet wird, wenn der erste Wärmeerzeuger (20) einen zweiten Betriebszustand der zumindest zwei Betriebszustände des ersten Wärmeerzeugers (20) einnimmt.

5. Verfahren nach zumindest einem der Ansprüche 1 bis 4, **dadurch gekennzeichnet, dass** das Umschalten einer Betriebsart der Wärmeerzeugungseinrichtung in Abhängigkeit von einer Aktivierung von einer oder mindestens zwei Regelstufen ausgeführt wird, wobei in einer ersten Regelstufe eine Nachladeunterdrückung solange aktiviert bleibt, wie eine Regelabweichung $\Delta T$ zwischen dem eingestellten Speichertemperatur-Sollwert $T_{SOLL}$ und einem ermittelten Speichertemperatur-Istwert $T_{IST}$ negativ oder kleiner als eine Abweichung $\Delta T_2$ ist, und wobei in einer zweiten Regelstufe die Nachladeunterdrückung solange aktiviert bleibt, bis der ermittelte momentane Speichertemperatur-Istwert $T_{IST}$ einen eingestellten Speichertemperatur-Mindestwert $T_{MIN}$ erreicht oder unterschreitet.

**6.** Verfahren nach Anspruch 5, **gekennzeichnet durch** die Schritte

- Aktivieren einer ersten Regelstufe, wenn der erste Wärmeerzeuger (20) den ersten Betriebszustand von zumindest zwei Betriebszuständen einnimmt und dem Wärmespeicher (30) Wärme zuführt, und
- Feststellen, ob der Abweichparameter eine zweite Bedingung erfüllt,

wobei der Schritt des Umschaltens von der ersten in die zweite Betriebsart ausgeführt wird, wenn die erste Regelstufe aktiviert ist und festgestellt wird, dass der Abweichungsparameter die zweite Bedingung erfüllt.

**7.** Verfahren nach Anspruch 6, **gekennzeichnet durch** die weiteren Schritte

- Festlegen einer ersten Nachlaufzeit, wenn eine Zufuhr von Wärme zu dem Wärmespeicher (30) durch den ersten Wärmeerzeuger (20) im ersten Betriebszustand ab einem ersten Zeitpunkt ununterbrochen bis zu einem zweiten Zeitpunkt ausgeführt wird und zu dem zweiten Zeitpunkt beendet wird, wenn der erste Wärmeerzeuger (20) den zweiten Betriebszustand einnimmt, in Abhängigkeit einer zwischen dem ersten und dem zweiten Zeitpunkt ermittelten ersten Wärmezufuhrdauer, und
- Deaktivieren der ersten Regelstufe, wenn dem Wärmespeicher (30) seit dem zweiten Zeitpunkt keine Wärme durch den ersten Wärmeerzeuger (20) zugeführt wird und seit dem zweiten Zeitpunkt ein Zeitintervall größer oder gleich der festgelegten ersten Nachlaufzeit abgelaufen ist.

**8.** Verfahren nach zumindest einem der Ansprüche 5 bis 7, **gekennzeichnet durch** den weiteren Schritt

- Aktivieren einer zweiten Regelstufe, wenn der erste Wärmeerzeuger (20) dem Wärmespeicher (30) Wärme im ersten Betriebszustand zuführt und die ermittelte Wärmezufuhrdauer einer ununterbrochenen Zufuhr von Wärme durch den ersten Wärmeerzeuger (20) mindestens einer vorbestimmten Mindestlaufzeit entspricht,

wobei der Schritt des Umschaltens von der ersten in die zweite Betriebsart ausgeführt wird, wenn die zweite Regelstufe aktiviert ist.

**9.** Verfahren nach Anspruch 8, **gekennzeichnet durch** den weiteren Schritt

- Deaktivieren der zweiten Regelstufe, wenn das Zuführen von Wärme zu dem Wärmespeicher (30) durch den ersten Wärmeerzeuger (20) unterbrochen oder beendet wird, wenn der erste Wärmeerzeuger (20) den zweiten Betriebszustand einnimmt.

**10.** Verfahren nach zumindest einem der Ansprüche 6 bis 9, **gekennzeichnet durch** den weiteren Schritt

- Feststellen, ob der Abweichungsparameter eine dritte Bedingung erfüllt, wobei der Schritt des Umschaltens von der zweiten in die erste Betriebsart der Wärmeerzeugungseinrichtung ausgeführt wird, wenn die erste Regelstufe nicht aktiviert ist oder festgestellt wird, dass der Abweichungsparameter die dritte Bedingung erfüllt.

**11.** Verfahren nach zumindest einem der Ansprüche 8 bis 10, **dadurch gekennzeichnet, dass** der Schritt des Umschaltens von der zweiten in die erste Betriebsart der Wärmeerzeugungseinrichtung nicht ausgeführt wird, wenn die zweite Regelstufe aktiviert ist.

**12.** Verfahren nach zumindest einem der Ansprüche 8 bis 11, **dadurch gekennzeichnet, dass** der Schritt des Umschaltens von der zweiten in die erste Betriebsart der Wärmeerzeugungseinrichtung unabhängig von einer Aktivierung der ersten oder zweiten Regelstufe ausgeführt wird, wenn der ermittelte Speichertemperatur-Istwert $T_{IST}$ einen vorbestimmten Speichertemperatur-Mindestwert TMIN erreicht oder unterschreitet.

**13.** Verfahren nach zumindest einem der Ansprüche 7 bis 12, **gekennzeichnet durch** die weiteren Schritte

- Festlegen einer zweiten Nachlaufzeit in Abhängigkeit einer zwischen einem dritten und einem vierten Zeitpunkt ermittelten zweiten Wärmezufuhrdauer und einer Restnachlaufzeit der ersten Nachlaufzeit, wenn das Zeitintervall zwischen dem zweiten und dem dritten Zeitpunkt kleiner der bestimmten ersten Nachlaufzeit ist und eine Zufuhr von Wärme zu dem Wärmespeicher (30) durch den ersten Wärmeerzeuger (20) im ersten Betriebszustand ab einem dritten Zeitpunkt nach dem zweiten Zeitpunkt ununterbrochen bis zu einem vierten Zeitpunkt ausgeführt wird und zu dem vierten Zeitpunkt beendet wird, wenn der erste Wärmeerzeuger (20) den zweiten Betriebszustand einnimmt,

wobei zwischen dem zweiten und dem dritten Zeitpunkt keine Wärme durch den ersten Wärmeerzeuger (20) im zweiten Betriebszustand zu dem Wärmespeicher (30) zugeführt wird,
die Restnachlaufzeit der ersten Nachlaufzeit in Abhängigkeit der ersten Nachlaufzeit und dem Zeitintervall zwischen dem zweiten und dem dritten Zeitpunkt bestimmt wird, und
die erste Regelstufe deaktiviert wird, wenn dem Wärmespeicher (30) seit dem vierten Zeitpunkt keine Wärme durch den ersten Wärmeerzeuger (20) zugeführt wird und seit dem vierten Zeitpunkt ein Zeitintervall größer oder gleich der bestimmten zweiten Nachlaufzeit abgelaufen ist.

14. Verfahren nach zumindest einem der Ansprüche 7 bis 13, **gekennzeichnet durch** den weiteren Verfahrensschritt

   - Einstellen eines Nachlaufzeit-Maximalgrenzwerts, der einen maximalen Grenzwert für das Festlegen einer Nachlaufzeit angibt, wobei beim Festlegen einer Nachlaufzeit höchstens eine Nachlaufzeit gleich dem eingestellten Nachlaufzeit-Maximalgrenzwert festgelegt wird.

15. Verfahren nach zumindest einem der Ansprüche 7 bis 14, **gekennzeichnet durch** den weiteren Verfahrensschritt

   - Zurücksetzen einer Restnachlaufzeit einer festgelegten Nachlaufzeit, wenn der Schritt des Umschaltens von der zweiten in die erste Betriebsart zu einem fünften Zeitpunkt ausgeführt wird, bevor die bestimmte Nachlaufzeit seit Beenden einer Zufuhr von Wärme durch den ersten Wärmeerzeuger (20) abgelaufen ist.

16. Vorrichtung zum Regeln einer Wärmeerzeugungseinrichtung mit einem ersten Wärmeerzeuger (20), einem zweiten Wärmeerzeuger (10) und einem Wärmespeicher (30) zum Speichern von Wärme, wobei der zweite Wärmeerzeuger (10) dazu geeignet ist, dem Wärmespeicher (30) Wärme zuzuführen, und wobei der erste Wärmeerzeuger (20) zumindest zwei Betriebszustände einnehmen kann und in einem ersten Betriebszustand der zumindest zwei Betriebszustände dem Wärmespeicher (30) Wärme zufüht und in einem zweiten Betriebszustand der zumindest zwei Betriebszustände dem Wärmespeicher (30) keine Wärme zuführt, wobei die Vorrichtung zum Regeln der Wärmeerzeugungseinrichtung umfasst:

   - eine Speichertemperatur-Istwert-Ermittlungseinrichtung (31) zum Ermitteln zumindest eines Speichertemperatur-Istwerts $T_{IST}$, der von einer Temperatur in zumindest einem Teil des Wärmespeichers abhängt,
   - ein Betriebszustand-Feststellmittel (411) zum Feststellen, ob der erste Wärmeerzeuger (20) den ersten Betriebszustand einnimmt,
   - ein Speichertemperatur-Sollwert-Einstellungsmittel (401) zum Einstellen eines Speichertemperatur-Sollwerts $T_{SOLL}$, der einen Sollwert der Speichertemperatur im Wärmespeicher angibt,
   - ein Abweichungsparameter-Bestimmungsmittel (412) zum Vergleichen des eingestellten Speichertemperatur-Sollwerts $T_{SOLL}$ mit dem ermittelten Speichertemperatur-Istwert $T_{IST}$ zum Bestimmen eines Abweichungsparameters zwischen dem eingestellten Speichertemperatur-Sollwert $T_{SOLL}$ und dem ermittelten Speichertemperatur-Istwert $T_{IST}$,
   - ein Abweichungsparameter-Prüfmittel (413; 421) zum Feststellen anhand des bestimmten Abweichungsparameters, ob dem Wärmespeicher (30) Wärme durch den zweiten Wärmeerzeuger (10) zuzuführen ist, wobei in einer ersten Betriebsart der Wärmeerzeugungseinrichtung dem Wärmespeicher (30) Wärme durch den zweiten Wärmeerzeuger (10) zuzuführen ist, wenn der bestimmte Abweichungsparameter eine erste Bedingung erfüllt,

   **gekennzeichnet durch**

   - ein Betriebsart-Umschaltmittel (414) zum Umschalten der Betriebsart der Wärmeerzeugungseinrichtung von der ersten Betriebsart in eine zweite Betriebsart in Abhängigkeit einer Zufuhr von Wärme durch den ersten Wärmeerzeuger (20) im ersten Betriebszustand und zum Umschalten der zweiten Betriebsart in die erste Betriebsart in Abhängigkeit einer Zufuhr von Wärme durch den ersten Wärmeerzeuger (20) im ersten Betriebszustand,

   wobei das Abweichungsparameter-Prüfmittel (413; 421) in der zweiten Betriebsart der Wärmeerzeugungseinrichtung beim Feststellen, ob dem Wärmespeicher (30) Wärme durch den zweiten Wärmeerzeuger (10) zuzuführen ist, feststellt, dass dem Wärmespeicher (30) keine Wärme durch den zweiten Wärmeerzeuger (10) zuzuführen ist.

**Claims**

1. A method of controlling a heat generating device comprising a first heat generator (20), a second heat generator (10), and a heat accumulator (30) for storing heat, wherein said second heat generator (10) is configured to supply heat to said heat accumulator (30) and, wherein said first heat generator (20) is able to enter at least two operating modes and, in a first operating mode of said at least two operating modes, supplies heat to said heat accumulator (30) and, in a second operating mode of said at least two operating modes, does not supply heat to said heat accumulator (30), the method for controlling said heat generating device comprising the steps of:

   - obtaining at least one accumulator temperature actual value $T_{IST}$ based on a temperature of at least a portion of said heat accumulator (30),
   - determining, whether said first heat generator (20) is in the first operating mode,
   - supplying heat to said heat accumulator (30) by said first heat generator (20) when it is determined that said first heat generator (20) is in the first operating mode of said at least two operating modes,
   - setting an accumulator temperature target value $T_{SOLL}$ indicating a target value of the accumulator temperature in said heat accumulator (30),
   - comparing the set accumulator temperature target value $T_{SOLL}$ with the obtained accumulator temperature actual value $T_{IST}$ for determining a deviation parameter between said accumulator temperature target value $T_{SOLL}$ and said accumulator temperature actual value $T_{IST}$,
   - determining, by means of the determined deviation parameter, whether heat is to be supplied to said heat accumulator (30) by said second heat generator (10), wherein, in a first operating mode of said heat generating device, heat is to be supplied to said heat accumulator (30) by said second heat generator (10) if the determined deviation parameter meets a first condition,

   **characterized by** the further step of:

   - switching an operating mode of said heat generating device from the first operating mode to the second operating mode based on a supply of heat by said first heat generator (20) in the first operating mode,

   wherein, in the second operating mode of said heat generating device in the step of determining, whether heat is to be supplied to said heat accumulator (30) by said second heat generator (10), it is determined that heat does not have to be supplied to said heat accumulator (30) by said second heat generator (10).

2. The method of claim 1, **characterized by** the step of switching an operating mode of said heat generating device from the second operating mode to the first operating mode based on a supply of heat by said first heat generator (20) in the first operating mode.

3. The method of claim 1 or 2, **characterized in that** switching an operating mode of said heat generating device is performed based on an estimated available amount of heat for the supply of heat by said first heat generator (20) in the first operating mode.

4. The method of at least one of the claims 1 to 3, **characterized by** the step of:

   obtaining a heat supply duration of a continuous heat supply by said first heat generator (20) in the first operating mode, wherein the heat supply duration indicates a time interval in which said first heat generator (20) continuously supplies heat to said heat accumulator (30) in the first operating mode until a heat supply by said first heat generator (20) is terminated when said first heat generator (20) enters a second operating mode of said at least two operating modes of said first heat generator (20).

5. The method of at least one of the claims 1 to 4, **characterized in that** switching an operating mode of said heat generating device is performed based on an activation of one or at least two control stages, wherein, in a first control stage, a recharging suppression is activated for as long as a control deviation $\Delta T$ between the set accumulator temperature target value $T_{SOLL}$ and the obtained accumulator temperature actual value $T_{IST}$ is negative or less than a deviation $\Delta T_2$, and wherein, in a second control stage, said recharging suppression is maintained activated until the obtained actual accumulator temperature actual value $T_{IST}$ reaches or falls below a set accumulator temperature minimal value $T_{MIN}$.

6. The method of claim 5, **characterized by** the steps of:

- activating a first control stage when said first heat generator (20) is in the first operating mode of at least two operating modes and supplies heat to said heat accumulator (30), and
- determining whether the deviation parameter meets a second condition,

wherein the step of switching from the first to the second operating mode is performed when the first control stage is activated and it is determined that the deviation parameter meets the second condition.

7. The method of claim 6, **characterized by** the further steps of

- setting a first follow-up time when a supply of heat to said first heat accumulator (30) by said first heat generator (20) in the first operating mode is performed continuously from a first point in time to a second point in time and is terminated at the second point in time when said first heat generator (20) enters the second operating mode based on a first heat supply duration obtained between the first and the second point in time, and

- deactivating the first control stage when no heat has been supplied to said heat accumulator (30) since the second point in time and a time interval greater than or equal to the set first follow-up time has elapsed since the second point in time.

8. The method of at least one of the claims 5 to 7, **characterized by** the further step of:

- activating a second control stage when said first heat generator (20) supplies heat to said heat accumulator (30) in the first operating mode and the obtained heat supply duration of a continuous supply of heat by said first heat generator (20) corresponds to at least a predetermined minimum run time,

wherein the step of switching from the first to the second operating mode is performed if the second control stage is activated.

9. The method of claim 8, **characterized by** the further step of

- deactivating the second control stage when the supply of heat to said heat accumulator (30) by said first heat generator (20) is interrupted or terminated if said first heat generator (20) is in the second operating mode.

10. The method of at least one of the claims 6 to 9, **characterized by** the further step of

- determining whether the deviation parameter meets a third condition, wherein the step of switching from the second to the first operating mode of said heat generating device is performed when the first control stage is not activated or it is determined that the deviation parameter meets the third condition.

11. The method of at least one of the claims 8 to 10, **characterized in that** the step of switching from the second to the first operating mode of said heat generating device is not performed if the second control stage is activated.

12. The method of at least one of the claims 8 to 11, **characterized in that** the step of switching from the second to the first operating mode of said heat generating device is performed independently of an activation of the first or second control stage when the obtained accumulator temperature actual value $T_{IST}$ reaches or falls below a set accumulator temperature minimal value $T_{MIN}$.

13. The method of at least one of the claims 7 to 12, **characterized by** the further steps of

- setting a second follow-up time based on a second heat supply duration obtained between a third and fourth point in time and a remaining follow-up time of the first follow-up time when the time interval between the second and third point in time is less than the determined first follow-up time and a supply of heat to said heat accumulator (30) by said first heat generator (20) in the first operating mode is executed continuously from a third point in time after the second point of time to a fourth point in time and is terminated at the fourth point in time when said first heat generator (20) is in the second operating mode,

wherein, between the second and third point in time, no heat is supplied by said first heat generator (20) to said heat accumulator (30) in the second operating mode,
the remaining follow-up time of the first follow-up time is determined based on the first follow-up time and the time interval between the second and third point in time, and

the first control stage is deactivated when no heat has been supplied to said heat accumulator (30) by said first heat generator (20) since the fourth point in time and a time interval greater than or equal to the determined second follow-up time has elapsed since the fourth point in time.

14. The method of at least one of the claims 7 to 13, **characterized by** the further method step of

- setting a follow-up time maximum threshold indicating a maximum threshold for setting a follow-up time, wherein, when setting a follow-up time, at most a follow-up time equal to the set follow-up time maximum threshold is set.

15. The method of at least one of the claims 7 to 14, **characterized by** the further method step of

- resetting a remaining follow-up time of a set follow-up time when the step of switching from the second to the first operating mode is performed at a fifth point in time before the set follow-up time has elapsed since a supply of heat by said first heat generator (20) has been terminated.

16. A device for controlling a heat generating device comprising a first heat generator (20), a second heat generator (10), and a heat accumulator (30) for storing heat, wherein said second heat generator (10) is configured to supply heat to said heat accumulator (30), and wherein said first heat generator (20) is able to enter at least two operating modes and, in a first operating mode of said at least two operating modes, supplies heat to said heat accumulator (30) and, in a second operating mode of said at least two operating modes, does not supply heat to said heat accumulator (30), the device for controlling said heat generating device comprising:

- an accumulator temperature actual value obtaining means (31) for obtaining at least an accumulator temperature actual value $T_{IST}$ based on a temperature of at least a portion of said heat accumulator,
- an operating mode determining means for determining whether said first heat generator (20) is in the first operating mode,
- an accumulator temperature target value setting means (401) for setting an accumulator temperature target value $T_{SOLL}$ indicating a target value of the accumulator temperature in said heat accumulator,
- a deviation parameter determining means (412) for comparing the set accumulator temperature target value $T_{SOLL}$ with the obtained accumulator temperature actual value $T_{IST}$ for determining a deviation parameter between the set accumulator temperature target value $T_{SOLL}$ and the obtained accumulator temperature actual value $T_{IST}$,
- a deviation parameter checking means (413; 421) for determining, by means of the determined deviation parameter, whether heat is to be supplied to said heat accumulator (30) by said second heat generator (10), wherein, in a first operating mode of said heat generating device, heat is to be supplied to said heat accumulator (30) by said second heat generator (10) if the determined deviation parameter meets a first condition, **characterized by**
- an operating mode switching means (414) for switching the operating mode of said heat generating device from the first operating mode to a second operating mode based on a supply of heat by said first heat generator (20) in the first operating mode and for switching the second operating mode to the first operating mode based on a supply of heat by said first heat generator (20) in the first operating mode,

wherein said deviation parameter examination means (413; 421), in the second operating mode of said heat generating device when determining whether heat is to be supplied to said heat accumulator (30) by said second heat generator (10), determines that heat does not have to be supplied to said heat accumulator (30) by said second heat generator (10).

## Revendications

1. Procédé de régulation d'une installation de génération de chaleur comportant un premier générateur de chaleur (20), un second générateur de chaleur (10) et un accumulateur de chaleur (30) destiné à stocker de la chaleur, le second générateur de chaleur (10) étant apte à apporter de la chaleur à l'accumulateur de chaleur (30), et le premier générateur de chaleur (20) pouvant prendre au moins deux états de fonctionnement et apportant, dans un premier état de fonctionnement parmi lesdits au moins deux états de fonctionnement, de la chaleur à l'accumulateur de chaleur (30) et n'apportant aucune chaleur à l'accumulateur de chaleur (30) dans un second état de fonctionnement parmi lesdits au moins deux états de fonctionnement, le procédé de régulation de l'installation de génération de chaleur comprenant les étapes consistant à :

- déterminer au moins une valeur réelle $T_{IST}$ de la température de stockage, qui dépend d'une température dans au moins une partie de l'accumulateur de chaleur (30),
- constater si le premier générateur de chaleur (20) prend le premier état de fonctionnement,
- apporter de la chaleur à l'accumulateur de chaleur (30) par le premier générateur de chaleur (20) lorsqu'il est constaté que le premier générateur de chaleur (20) prend le premier état de fonctionnement parmi lesdits au moins deux états de fonctionnement,
- régler une valeur de consigne $T_{SOLL}$ de la température de stockage, qui indique une valeur de consigne de la température de stockage dans l'accumulateur de chaleur (30),
- comparer la valeur de consigne $T_{SOLL}$ réglée de la température de stockage à la valeur réelle $T_{IST}$ déterminée de la température de stockage pour définir un paramètre d'écart entre la valeur de consigne $T_{SOLL}$ et la valeur réelle $T_{IST}$ de la température de stockage,
- en se basant sur le paramètre d'écart défini, constater si de la chaleur doit être apportée à l'accumulateur de chaleur (30) par le second générateur de chaleur (10), et dans un premier mode de fonctionnement de l'installation de génération de chaleur, de la chaleur doit être apportée à l'accumulateur de chaleur (30) par le second générateur de chaleur (10) lorsque le paramètre d'écart défini satisfait une première condition,

**caractérisé par** l'autre étape consistant à :

- commuter un mode de fonctionnement de l'installation de génération de chaleur pour passer du premier mode de fonctionnement au second, en fonction d'un apport de chaleur par le premier générateur de chaleur (20) dans le premier état de fonctionnement,

dans lequel
dans le second mode de fonctionnement de l'installation de génération de chaleur, dans l'étape consistant à constater si de la chaleur doit être apportée à l'accumulateur de chaleur (30) par le second générateur de chaleur (10), il est constaté qu'aucune chaleur ne doit être apportée à l'accumulateur de chaleur (30) par le second générateur de chaleur (10).

2. Procédé selon la revendication 1, **caractérisé par** l'étape consistant à commuter le mode de fonctionnement de l'installation de génération de chaleur pour passer du second mode de fonctionnement au premier mode de fonctionnement, en fonction d'un apport de chaleur par le premier générateur de chaleur (20) dans le premier état de fonctionnement.

3. Procédé selon la revendication 1 ou 2, **caractérisé en ce que** la commutation d'un mode de fonctionnement de l'installation de génération de chaleur est réalisée en fonction d'une quantité de chaleur disponible estimée pour l'apport de chaleur par le premier générateur de chaleur (20) dans le premier état de fonctionnement.

4. Procédé selon l'une au moins des revendications 1 à 3, **caractérisé par** l'étape consistant à :

- déterminer une durée d'apport de chaleur d'un apport de chaleur ininterrompu par le premier générateur de chaleur (20) dans le premier état de fonctionnement, la durée d'apport de chaleur indiquant un intervalle de temps dans lequel le premier générateur de chaleur (20) apporte sans interruption de la chaleur à l'accumulateur de chaleur (30) dans le premier état de fonctionnement, jusqu'à ce qu'un apport de chaleur par le premier générateur de chaleur (20) soit terminé lorsque le premier générateur de chaleur (20) prend un second état de fonctionnement parmi lesdits au moins deux états de fonctionnement du premier générateur de chaleur (20).

5. Procédé selon l'une au moins des revendications 1 à 4, **caractérisé en ce que** la commutation d'un mode de fonctionnement de l'installation de génération de chaleur est réalisée en fonction d'une activation d'un étage de régulation ou d'au moins deux étages de régulation, et dans un premier étage de régulation une suppression de rechargement reste activée jusqu'à ce qu'un écart de régulation $\Delta T$ entre la valeur de consigne $T_{SOLL}$ réglée de la température de stockage et une valeur réelle déterminée $T_{IST}$ de la température de stockage soit négatif ou inférieur à un écart $\Delta T_2$, et dans un second étage de régulation la suppression de rechargement reste activée jusqu'à ce que la valeur réelle déterminée momentanée $T_{IST}$ de la température de stockage atteigne ou passe au-dessous d'une valeur minimale réglée $T_{MIN}$ de la température de stockage.

**6.** Procédé selon la revendication 5, **caractérisé par** les étapes consistant à :

- activer un premier étage de régulation lorsque le premier générateur de chaleur (20) prend le premier état de fonctionnement parmi au moins deux états de fonctionnement et apporte de la chaleur à l'accumulateur de chaleur (30), et
- constater si le paramètre d'écart satisfait une seconde condition,

l'étape consistant à commuter du premier mode de fonctionnement au second étant mise en oeuvre lorsque le premier étage de régulation est activé et qu'il est constaté que le paramètre d'écart satisfait la seconde condition.

**7.** Procédé selon la revendication 6, **caractérisé par** les autres étapes consistant à :

- fixer un premier temps de post-fonctionnement lorsqu'un apport de chaleur à l'accumulateur de chaleur (30) par le premier générateur de chaleur (20) dans le premier état de fonctionnement est réalisé sans interruption à partir d'un premier instant jusqu'à un second instant et est terminé au second instant lorsque le premier générateur de chaleur (20) prend le second état de fonctionnement, en fonction d'une première durée d'apport de chaleur déterminée entre le premier et le second instant, et
- désactiver le premier étage de régulation lorsqu'aucune chaleur n'est apportée à l'accumulateur de chaleur (30) par le premier générateur de chaleur (20) depuis le second instant et qu'un intervalle de temps supérieur ou égal au premier temps de post-fonctionnement fixé s'est écoulé depuis le second instant.

**8.** Procédé selon l'une au moins des revendications 5 à 7, **caractérisé par** l'autre étape consistant à :

- activer un second étage de régulation lorsque le premier générateur de chaleur (20) apporte de la chaleur à l'accumulateur de chaleur (30) dans le premier état de fonctionnement et que la durée déterminée d'un apport de chaleur interrompu par le premier générateur de chaleur (20) correspond au moins à un temps de fonctionnement minimal prédéterminé,

l'étape de la commutation du premier mode de fonctionnement au second étant mise en oeuvre lorsque le second étage de régulation est activé.

**9.** Procédé selon la revendication 8, **caractérisé par** l'autre étape consistant à :

- désactiver le second étage de régulation lorsque l'apport de chaleur à l'accumulateur de chaleur (30) par le premier générateur de chaleur (20) est interrompu ou terminé lorsque le premier générateur de chaleur (20) prend le second état de fonctionnement.

**10.** Procédé selon l'une au moins des revendications 6 à 9, **caractérisé par** l'autre étape consistant à :

- constater si le paramètre d'écart satisfait une troisième condition, l'étape de la commutation du second mode de fonctionnement de l'installation de génération de chaleur au premier étant mise en oeuvre lorsque le premier étage de régulation n'est pas activé ou lorsqu'il est constaté que le paramètre d'écart ne satisfait pas la troisième condition.

**11.** Procédé selon l'une au moins des revendications 8 à 10, **caractérisé en ce que** l'étape de la commutation du second mode de fonctionnement de l'installation de génération de chaleur au premier n'est pas mise en oeuvre lorsque le second étage de régulation est activé.

**12.** Procédé selon l'une au moins des revendications 8 à 11, **caractérisé en ce que** l'étape de la commutation du second mode de fonctionnement de l'installation de génération de chaleur au premier est mise en oeuvre indépendamment d'une activation du premier ou second étage de régulation lorsque la valeur réelle déterminée $T_{IST}$ de la température de stockage atteint ou passe au-dessous d'une valeur minimale prédéterminée $T_{MIN}$ de la température de stockage.

**13.** Procédé selon l'une au moins des revendications 7 à 12, **caractérisé par** les autres étapes consistant à :

- fixer un second temps de post-fonctionnement en fonction d'une seconde durée d'apport de chaleur déterminée entre un troisième et un quatrième instant, et un temps de post-fonctionnement résiduel du premier temps de post-fonctionnement lorsque l'intervalle de temps entre le second et le troisième instant est inférieur au premier temps de post-fonctionnement défini et qu'un apport de chaleur à l'accumulateur de chaleur (30) par le premier générateur de chaleur (20) dans le premier état de fonctionnement est réalisé sans interruption à partir d'un troisième instant après le second instant jusqu'à un quatrième instant et est terminé au quatrième instant lorsque le premier générateur de chaleur (20) prend le second état de fonctionnement,

dans lequel, entre le second et le troisième instant, aucune chaleur n'est apportée à l'accumulateur de chaleur (30) par le premier générateur de chaleur (20) dans le second état de fonctionnement,

le temps de post-fonctionnement résiduel du premier temps de post-fonctionnement est défini en fonction du premier temps de post-fonctionnement et de l'intervalle de temps entre le second et le troisième instant, et

le premier étage de régulation est désactivé lorsqu'aucune chaleur n'est apportée à l'accumulateur de chaleur (30) par le premier générateur de chaleur (20) depuis le quatrième instant et qu'un intervalle de temps supérieur ou égal au second temps de post-fonctionnement défini s'est écoulé depuis le quatrième instant.

**14.** Procédé selon l'une au moins des revendications 7 à 13, **caractérisé par** l'autre étape de procédé consistant à :

- régler une valeur limite maximale du temps de post-fonctionnement, qui indique une valeur limite maximale pour fixer un temps de post-fonctionnement, et lors de la fixation d'un temps de post-fonctionnement, un temps de post-fonctionnement au maximum égal à la valeur limite maximale réglée du temps de post-fonctionnement est fixé.

**15.** Procédé selon l'une au moins des revendications 7 à 14, **caractérisé par** l'autre étape de procédé consistant à :

- remettre à zéro un temps de post-fonctionnement résiduel d'un temps de post-fonctionnement fixé lorsque l'étape de la commutation du second mode de fonctionnement au premier est réalisée à un cinquième instant avant que le temps de post-fonctionnement défini depuis terminaison d'un apport de chaleur par le premier générateur de chaleur (20) se soit écoulé.

**16.** Dispositif de régulation d'une installation de génération de chaleur comportant un premier générateur de chaleur (20), un second générateur de chaleur (10) et un accumulateur de chaleur (30) destiné à stocker de la chaleur, le second générateur de chaleur (10) étant apte à apporter de la chaleur à l'accumulateur de chaleur (30), et le premier générateur de chaleur (20) pouvant prendre au moins deux états de fonctionnement et apportant, dans un premier état de fonctionnement parmi lesdits au moins deux états de fonctionnement, de la chaleur à l'accumulateur de chaleur (30) et n'apportant aucune chaleur à l'accumulateur de chaleur (30) dans un second état de fonctionnement parmi lesdits au moins deux états de fonctionnement, le dispositif de régulation de l'installation de génération de chaleur comprenant :

- un moyen de détermination de valeur réelle de température de stockage (31) pour déterminer au moins une valeur réelle $T_{IST}$ de la température de stockage, qui dépend d'une température dans au moins une partie de l'accumulateur de chaleur,
- un moyen de constatation d'état de fonctionnement (411) pour constater si le premier générateur de chaleur (20) prend le premier état de fonctionnement,
- un moyen de réglage de valeur de consigne de température de stockage (401) pour régler une valeur de consigne $T_{SOLL}$ de la température de stockage, qui indique une valeur de consigne de la température de stockage dans l'accumulateur de chaleur,
- un moyen de définition de paramètre d'écart (412) pour comparer la valeur de consigne $T_{SOLL}$ réglée de la température de stockage à la valeur réelle $T_{IST}$ déterminée de la température de stockage pour définir un paramètre d'écart entre la valeur de consigne réglée $T_{SOLL}$ et la valeur réelle déterminée $T_{IST}$ de la température de stockage,
- un moyen de contrôle de paramètre d'écart (413 ; 421) pour constater, en se basant sur le paramètre d'écart défini, si de la chaleur doit être apportée à l'accumulateur de chaleur (30) par le second générateur de chaleur (10), et dans un premier mode de fonctionnement de l'installation de génération de chaleur, de la chaleur doit être apportée à l'accumulateur de chaleur (30) par le second générateur de chaleur (10) lorsque le paramètre d'écart défini satisfait une première condition,

**caractérisé par**

- un moyen de commutation de mode de fonctionnement (414) pour commuter le mode de fonctionnement de l'installation de génération de chaleur pour passer du premier mode de fonctionnement à un second mode de fonctionnement, en fonction d'un apport de chaleur par le premier générateur de chaleur (20) dans le premier état de fonctionnement, et pour commuter le second mode de fonctionnement au premier mode de fonctionnement en fonction d'un apport de chaleur par le premier générateur de chaleur (20) dans le premier état de fonctionnement,

dans lequel
dans le second mode de fonctionnement de l'installation de génération de chaleur, lors de la constatation si de la chaleur doit être apportée à l'accumulateur de chaleur (30) par le second générateur de chaleur (10), le moyen de contrôle de paramètre d'écart (413 ; 421) constate qu'aucune chaleur ne doit être apportée à l'accumulateur de chaleur (30) par le second générateur de chaleur (10).

Fig. 1

Fig. 2A

Ⓑ                    Ⓐ

Ermitteln des momentanen
Speichertemperatur-Istwerts $T_{IST}$ ——— S208

Bestimmen des momentanen
Abweichungsparameters $\Delta T$ ——— S209

NEIN ◁————— $\Delta T \leq -\Delta T_1$ ? ——— S210

JA

Abschalten des Brenners ——— S211

Zurück zu S202

Fig. 2B
(Fig. 2A fortgesetzt)

**Fig. 3A**

```
        ┌──────────────┐
        │    START     │
        └──────┬───────┘
               │
               ▼
   ┌──────────────────────────┐
   │   Ermitteln des momentanen│ ── S301
   │ Speichertemperatur-Istwerts $T_{IST}$ │
   └──────────┬───────────────┘
              │
              ▼
   ┌──────────────────────────┐
   │   Ermitteln des momentanen│ ── S302
   │ Speichertemperatur-Istwerts│
   │       $T_{KOLLEKTOR}$      │
   └──────────┬───────────────┘
              │
              ▼
   ┌──────────────────────────┐
   │  Bestimmen der mommentanen│ ── S303
   │ Kollektorkreisdifferenz $\Delta T_{KOLLEKTOR}$ │
   └──────────┬───────────────┘
              │
              ▼
```

NEIN ◄──── $\Delta T_{KOLLEKTOR} \geq \Delta T_4$ ? ────► JA

S304

( B )                    ( A )

Fig. 3B
(Fig. 3A fortgesetzt)

EP 2 199 691 B1

Fig. 3C
(Fig. 3B fortgesetzt)

D

C

S309 — 2. Regelstufe aktiv?

NEIN → Aktivieren der 2. Regelstufe — S310

JA

Ermitteln des momentanen Speichertemperatur-Istwerts $T_{IST}$ — S311

Ermitteln des momentanen Kollektortemperatur-Istwerts $T_{KOLLEKTOR}$ — S312

Bestimmen der momentanen Kollektorkreisdifferenz $\Delta T_{KOLLEKTOR}$ — S313

ZURÜCK ZU S307 ← NEIN — $\Delta T_{KOLLEKTOR} \leq \Delta T_2$ ? — S314

JA

E

E

Ausschalten der
Kollektorkreispumpe S315

2. Regelstufe
aktiv ?
S316

JA

NEIN

Deaktivieren der
2. Regelstufe S317

Bestimmen der
Nachlaufzeit T
S318

ZURÜCK ZU
START

Fig. 3D
(FIG. 3C fortgesetzt)

Fig. 4

Fig. 5

**EP 2 199 691 B1**

**IN DER BESCHREIBUNG AUFGEFÜHRTE DOKUMENTE**

**In der Beschreibung aufgeführte Patentdokumente**

- DE 10312520 A1